# EUROPÄISCHE PATENTSCHRIFT

(11) **EP 3 595 267 B1**
(45) Veröffentlichungstag und Bekanntmachung des Hinweises auf die Patenterteilung: **17.06.2020**
(21) Anmeldenummer: 18182973.0
(22) Anmeldetag: 11.07.2018
(51) Int. Cl.: H04L 9/32, H04L 29/08, H04L 29/06

(54) **VERFAHREN, VORRICHTUNGEN UND SYSTEM ZUM DATENAUSTAUSCH ZWISCHEN EINEM VERTEILTEN DATENBANKSYSTEM UND GERÄTEN**
METHOD, DEVICES AND SYSTEM FOR EXCHANGING DATA BETWEEN A DISTRIBUTED DATABASE SYSTEM AND DEVICES
PROCÉDÉ, DISPOSITIFS ET SYSTÈME D'ÉCHANGE DE DONNÉES ENTRE UN SYSTÈME DE BANQUE DE DONNÉES DISTRIBUÉ ET APPAREILS

(43) Veröffentlichungstag der Anmeldung: 15.01.2020
(73) Patentinhaber: Siemens Aktiengesellschaft, 80333 München (DE)
(72) Erfinder: Jetzfellner, Thomas, 85609 Aschheim (DE)

(56) Entgegenhaltungen:
- WO-A1-2017/167549
- DE-A1-102016 118 614
- DE-A1-102016 215 914

## Beschreibung

Die Erfindung bezieht sich auf Verfahren, Vorrichtungen und ein System zum Datenaustausch zwischen einem verteilten Datenbanksystem und Geräten.

Geräte, wie Feldgeräte und Fertigungsgeräte, werden immer stärker vernetzt und können beispielsweise von unterschiedlichen Betreibern bereitgestellt/betrieben werden. Diesen Geräten werden oft Befehlsfolgen übermittelt, die durch die Geräte ausgeführt werden können. Nachteilig ist dabei, dass alte Geräte oft nicht mit der neuen IT-Infrastruktur ohne weiteres kommunizieren können.

Aus dem Stand der Technik sind die Dokumente WO 2017/167549 A1, die DE 10 2016 215914 A1 und DE 10 2016 118614 A1 bekannt.

Eine Aufgabe der vorliegenden Erfindung ist es, eine Alternative zu bekannten Lösungen aus dem Stand der Technik zu finden.

Die Aufgabe wird durch die in den unabhängigen Ansprüchen angegebenen Merkmale gelöst. In den abhängigen Ansprüchen sind vorteilhafte Weiterbildungen der Erfindung dargestellt.

Die Technologie von Blockketten (engl. Blockchains) bzw. "Distributed Ledgers" ist aktuell eine intensiv diskutierte Technologie, die insbesondere als verteiltes Datenbanksystem realisiert sein kann. Neben Anwendungen für dezentrale Bezahlsysteme (z. B. Bitcoin) werden in der Finanzindustrie neue Anwendungsmöglichkeiten entwickelt. Insbesondere können Transaktionen zwischen Firmen dadurch ohne Vermittler bzw. Clearing-Stelle manipulationsgeschützt realisiert werden. Dies ermöglicht neue Geschäftsmodelle ohne einen vertrauenswürdigen Vermittler, es reduziert die Transaktionskosten, und es können flexibel neue digitale Dienste angeboten werden, ohne eine dafür speziell eingerichtete Infrastruktur und Vertrauensbeziehungen einrichten zu müssen. Ein durch eine Blockchain geschützter Transaktionsdatensatz (oder kurz Transaktion) umfasst z. B. Programmcode, der auch als sogenannter "Smart Contract" bezeichnet werden kann.

Gemäß einem ersten Aspekt betrifft die Erfindung eine Empfangsvorrichtung, umfassend:
- beispielsweise eine erste Kommunikationsschnittstelle, wobei
   - beispielsweise die erste Kommunikationsschnittstelle dazu eingerichtet ist mit einem verteilten Datenbanksystem kommunizieren,
   - beispielsweise die erste Kommunikationsschnittstelle dazu eingerichtet ist erste Nachrichten von dem verteilten Datenbanksystem zu empfangen;
- beispielsweise ein Identifikationsmodul, wobei
   - beispielsweise das Identifikationsmodul dazu eingerichtet ist anhand des jeweiligen Nachrichteninhalts der ersten Nachrichten eine Zuordnung berechnet, für welche Geräte eine entsprechende erste Nachricht bestimmt ist;
- beispielsweise ein Konvertierungsmodul, wobei
   - beispielsweise das Konvertierungsmodul dazu eingerichtet ist den Nachrichteninhalt der entsprechenden ersten Nachricht in ein Datenformat für das zugeordnete Gerät zu konvertieren;
- beispielsweise eine zweite Kommunikationsschnittstelle, wobei
- beispielsweise die zweite Kommunikationsschnittstelle dazu eingerichtet ist den konvertieren Nachrichteninhalt und/oder den Nachrichteninhalt der entsprechenden ersten Nachricht (und/oder die erste Nachricht selbst) an das Gerät zu übertragen, das der entsprechenden ersten Nachricht zugeordnet ist.

Sofern es in der nachfolgenden Beschreibung nicht anders angegeben ist, beziehen sich die Begriffe "durchführen", "berechnen", "rechnergestützt", "rechnen", "feststellen", "generieren", "konfigurieren", "rekonstruieren" und dergleichen vorzugsweise auf Handlungen und/oder Prozesse und/oder Verarbeitungsschritte, die Daten verändern und/oder erzeugen und/oder die Daten in andere Daten überführen, wobei die Daten insbesondere als physikalische Größen dargestellt werden oder vorliegen können, beispielsweise als elektrische Impulse. Insbesondere sollte der Ausdruck "Computer" möglichst breit ausgelegt werden, um insbesondere alle elektronischen Geräte mit Datenverarbeitungseigenschaften abzudecken. Computer können somit beispielsweise Personal Computer, Server, speicherprogrammierbare Steuerungen (SPS), Handheld-Computer-Systeme, Pocket-PC-Geräte, Mobilfunkgeräte und andere Kommunikationsgeräte, die rechnergestützt Daten verarbeiten können, Prozessoren und andere elektronische Geräte zur Datenverarbeitung sein.

Unter "rechnergestützt" kann im Zusammenhang mit der Erfindung beispielsweise eine Implementierung des Verfahrens verstanden werden, bei dem insbesondere ein Prozessor mindestens einen Verfahrensschritt des Verfahrens ausführt. Beispielsweise ist unter "rechnergestützt" auch "computerimplementiert" zu verstehen.

Unter einem Prozessor kann im Zusammenhang mit der Erfindung beispielsweise eine Maschine oder eine elektronische Schaltung verstanden werden. Bei einem Prozessor kann es sich insbesondere um einen Hauptprozessor (engl. Central Processing Unit, CPU), einen Mikroprozessor oder einen Mikrokontroller, beispielsweise eine anwendungsspezifische integrierte Schaltung oder einen digitalen Signalprozessor, möglicherweise in Kombination mit einer Speichereinheit zum Speichern von Programmbefehlen, etc. handeln. Bei einem Prozessor kann es sich beispielsweise auch um einen IC (integrierter Schaltkreis, engl. Integrated Circuit), insbesondere einen FPGA (engl. Field Programmable Gate Array) oder einen ASIC (anwendungsspezifische integrierte Schaltung, engl. Application-Specific Integrated Circuit), oder einen DSP (Digitaler Signalprozessor, engl. Digital Signal Processor) oder einen Grafikprozessor GPU (Graphic Processing Unit) handeln. Auch kann unter einem Prozessor ein virtualisierter Prozessor, eine virtuelle Maschine oder eine Soft-CPU verstanden werden. Es kann sich beispielsweise auch um einen programmierbaren Prozessor handeln, der mit Konfigurationsschritten zur Ausführung des genannten erfindungsgemäßen Verfahrens ausgerüstet wird oder mit Konfigurationsschritten derart konfiguriert ist, dass der programmierbare Prozessor die erfindungsgemäßen Merkmale des Verfahrens, der Komponente, der Module, oder anderer Aspekte und/oder Teilaspekte der Erfindung realisiert.

Unter einer "Speichereinheit" oder "Speichermodul" und dergleichen kann im Zusammenhang mit der Erfindung beispielsweise ein flüchtiger Speicher in Form von Arbeitsspeicher (engl. Random-Access Memory, RAM) oder ein dauerhafter Speicher wie eine Festplatte oder ein Datenträger verstanden werden.

Unter einem "Modul" kann im Zusammenhang mit der Erfindung beispielsweise ein Prozessor und/oder eine Speichereinheit zum Speichern von Programmbefehlen verstanden werden. Beispielsweise ist der Prozessor speziell dazu eingerichtet, die Programmbefehle derart auszuführen, damit der Prozessor Funktionen ausführt, um das erfindungsgemäße Verfahren oder einen Schritt des erfindungsgemäßen Verfahrens zu implementieren oder realisieren. Ein Modul kann beispielsweise auch ein Knoten des verteilten Datenbanksystems sein, der beispielsweise die spezifischen Funktionen/Merkmale eines entsprechenden Moduls realisiert. Die jeweiligen Module können beispielsweise auch als separate bzw. eigenständige Module ausgebildet sein. Hierzu können die entsprechenden Module beispielsweise weitere Elemente umfassen. Diese Elemente sind beispielsweise eine oder mehrere Schnittstellen (z. B. Datenbankschnittstellen, Kommunikationsschnittstellen - z. B. Netzwerkschnittstelle, WLAN-Schnittstelle) und/oder eine Evaluierungseinheit (z. B. ein Prozessor) und/oder eine Speichereinheit. Mittels der Schnittstellen können beispielsweise Daten ausgetauscht (z. B. empfangen, übermittelt, gesendet oder bereitgestellt werden). Mittels der Evaluierungseinheit können Daten beispielsweise rechnergestützt und/oder automatisiert verglichen, überprüft, verarbeitet, zugeordnet oder berechnet werden. Mittels der Speichereinheit können Daten beispielsweise rechnergestützt und/oder automatisiert gespeichert, abgerufen oder bereitgestellt werden.

Unter "umfassen", insbesondere in Bezug auf Daten und/oder Informationen, kann im Zusammenhang mit der Erfindung beispielsweise ein (rechnergestütztes) Speichern einer entsprechenden Information bzw. eines entsprechenden Datums in einer Datenstruktur/Datensatz (die z. B. wiederum in einer Speichereinheit gespeichert ist) verstanden werden.

Unter "zuordnen", insbesondere in Bezug auf Daten und/oder Informationen, kann im Zusammenhang mit der Erfindung beispielsweise eine rechnergestützte Zuordnung von Daten und/oder Informationen verstanden werden. Beispielsweise wird einem ersten Datum hierzu mittels einer Speicheradresse oder eines eindeutigen Identifizierers (engl. unique identifier (UID)) ein zweites Datum zugeordnet, in dem z. B. das erste Datum zusammen mit der Speicheradresse oder des eindeutigen Identifizierers des zweites Datums in einem Datensatz gespeichert wird.

Unter "bereitstellen", insbesondere in Bezug auf Daten und/oder Informationen, kann im Zusammenhang mit der Erfindung beispielsweise ein rechnergestütztes Bereitstellen verstanden werden. Das Bereitstellen erfolgt beispielsweise über eine Schnittstelle (z. B. eine Datenbankschnittstelle, eine Netzwerkschnittstelle, eine Schnittstelle zu einer Speichereinheit). Über diese Schnittstelle können beispielsweise beim Bereitstellen entsprechende Daten und/oder Informationen übermittelt und/oder gesendet und/oder abgerufen und/oder empfangen werden.

Unter "bereitstellen" kann im Zusammenhang mit der Erfindung beispielsweise auch ein Laden oder ein Speichern, beispielsweise einer Transaktion mit entsprechenden Daten verstanden werden. Dies kann beispielsweise auf oder von einem Speichermodul erfolgen. Unter "Bereitstellen" kann beispielsweise auch ein Übertragen (oder ein Senden oder ein Übermitteln) von entsprechenden Daten von einem Knoten zu einem anderen Knoten der Blockkette oder des verteilten Datenbanksystems (bzw. deren Infrastruktur) verstanden werden.

Unter einer "Prüfsumme", beispielsweise eine Datenblockprüfsumme, eine Datenprüfsumme, eine Knotenprüfsumme, eine Transaktionsprüfsumme, eine Verkettungsprüfsumme oder dergleichen, kann im Zusammenhang mit der Erfindung beispielsweise eine kryptographische Prüfsumme oder kryptographischer Hash bzw. Hashwert verstanden werden, die insbesondere mittels einer kryptographischen Hashfunktion über einen Datensatz und/oder Daten und/oder eine oder mehrere der Transaktionen und/oder einem Teilbereich eines Datenblocks (z. B. der Block-Header eines Blocks einer Blockkette oder Datenblock-Header eines Datenblocks des verteilten Datenbanksystems oder nur einem Teil der Transaktionen eines Datenblocks) gebildet oder berechnet werden. Bei einer Prüfsumme kann es sich insbesondere um eine Prüfsumme/n oder Hashwert/e eines Hash-Baumes (z. B. Merkle Baum, Patricia-Baum) handeln. Weiterhin kann darunter insbesondere auch eine digitale Signatur oder ein kryptographischer Nachrichtenauthentisierungscode verstanden werden. Mittels der Prüfsummen kann beispielsweise auf unterschiedlichen Ebenen des Datenbanksystems ein kryptographischer Schutz/Manipulationsschutz für die Transaktionen und die darin gespeicherten Daten(sätze) realisiert werden. Ist beispielsweise eine hohe Sicherheit gefordert, werden beispielsweise die Prüfsummen auf Transaktionsebene erzeugt und überprüft. Ist eine weniger hohe Sicherheit gefordert, werden beispielsweise die Prüfsummen auf Blockebene (z. B. über den ganzen Datenblock oder nur über einen Teil des Datenblocks und/oder einen Teil der Transkationen) erzeugt und überprüft.

Unter einer "Datenblockprüfsumme" kann im Zusammenhang mit der Erfindung eine Prüfsumme verstanden werden, die beispielsweise über einen Teil oder alle Transaktionen eines Datenblocks berechnet wird. Ein Knoten kann dann beispielsweise die Integrität/Authentizität des entsprechenden Teils eines Datenblocks mittels der Datenblockprüfsumme prüfen/feststellen. Zusätzlich oder alternativ kann die Datenblockprüfsumme insbesondere auch über Transaktionen eines vorhergehenden Datenblocks/Vorgänger-Datenblocks des Datenblocks gebildet worden sein. Die Datenblockprüfsumme kann dabei insbesondere auch mittels eines Hash-Baumes, beispielsweise einem Merkle Baum [1] oder einem Patricia-Baum, realisiert werden, wobei die Datenblockprüfsumme insbesondere die Wurzel-Prüfsumme des Merkle-Baumes bzw. eines Patricia-Baumes bzw. eines binären Hashbaumes ist. Insbesondere werden Transaktionen mittels weiterer Prüfsummen aus dem Merkle-Baum bzw. Patricia-Baum abgesichert (z. B. unter Verwendung der Transaktionsprüfsummen), wobei insbesondere die weiteren Prüfsummen Blätter im Merkle-Baum bzw. Patricia-Baum sind. Die Datenblockprüfsumme kann damit beispielsweise die Transaktionen absichern, indem die Wurzel-Prüfsumme aus den weiteren Prüfsummen gebildet wird. Die Datenblockprüfsumme kann insbesondere für Transaktionen eines bestimmten Datenblocks der Datenblöcke berechnet werden. Insbesondere kann eine solche Datenblockprüfsumme in einen nachfolgenden Datenblock des bestimmten Datenblocks eingehen, um diesen nachfolgenden Datenblock beispielsweise mit seinen vorhergehenden Datenblöcken zu verketten und insbesondere damit eine Integrität des verteilten Datenbanksystems prüfbar zu machen. Hierdurch kann die Datenblockprüfsumme beispielsweise die Funktion der Verkettungsprüfsumme übernehmen oder in die Verkettungsprüfsumme eingehen. Der Header eines Datenblocks (z. B. eines neuen Datenblocks oder des Datenblocks für den die Datenblockprüfsumme gebildet wurde) kann beispielsweise die Datenblockprüfsumme umfassen.

Unter "Transaktionsprüfsumme" kann im Zusammenhang mit der Erfindung eine Prüfsumme verstanden werden, die insbesondere über eine Transaktion eines Datenblocks gebildet wird. Zusätzlich kann beispielsweise eine Berechnung einer Datenblockprüfsumme für einen entsprechenden Datenblock beschleunigt werden, da hierfür beispielsweise bereits berechnete Transaktionsprüfsummen gleich als Blätter z. B. eines Merkle-Baumes verwendet werden können.

Unter einer "Verkettungsprüfsumme" kann im Zusammenhang mit der Erfindung eine Prüfsumme verstanden werden, die insbesondere einen jeweiligen Datenblock des verteilten Datenbanksystems den vorhergehenden Datenblock des verteilten Datenbanksystems angibt bzw. referenziert (in der Fachliteratur insbesondere häufig als "previous block hash" bezeichnet) [1]. Hierfür wird insbesondere für den entsprechenden vorhergehenden Datenblock eine entsprechende Verkettungsprüfsumme gebildet. Als Verkettungsprüfsumme kann beispielsweise eine Transaktionsprüfsumme oder die Datenblockprüfsumme eines Datenblocks (also ein vorhandener Datenblock des verteilten Datenbanksystems) verwendet werden, um einen neuen Datenblock mit einem (vorhandenen) Datenblock des verteilten Datenbanksystems zu verketten. Es ist beispielsweise aber auch möglich, dass eine Prüfsumme über einen Header des vorhergehenden Datenblocks oder über den gesamten vorhergehenden Datenblock gebildet wird und als Verkettungsprüfsumme verwendet wird. Dies kann beispielsweise auch für mehrere oder alle vorhergehenden Datenblöcke berechnet werden. Es ist beispielsweise auch realisierbar, dass über den Header eines Datenblocks und der Datenblockprüfsumme die Verkettungsprüfsumme gebildet wird. Ein jeweiliger Datenblock des verteilten Datenbanksystems umfasst jedoch vorzugsweise jeweils eine Verkettungsprüfsumme, die für einen vorhergehenden Datenblock, insbesondere noch bevorzugter den direkt vorhergehenden Datenblock, des jeweiligen Datenblockes berechnet wurde bzw. sich auf diesen bezieht. Es ist beispielsweise auch möglich, dass eine entsprechende Verkettungsprüfsumme auch nur über einen Teil des entsprechenden Datenblocks (z. B. vorhergehenden Datenblock) gebildet wird. Hierdurch kann beispielsweise ein Datenblock realisiert werden, der einen integritätsgeschützten Teil und einen ungeschützten Teil umfasst. Damit ließe sich beispielsweise ein Datenblock realisieren, dessen integritätsgeschützter Teil unveränderlich ist und dessen ungeschützter Teil auch noch später verändert werden kann. Unter integritätsgeschützt ist dabei insbesondere zu verstehen, dass eine Veränderung von integritätsgeschützten Daten mittels einer Prüfsumme feststellbar ist.

Die Daten, die beispielsweise in einer Transkation eines Datenblocks gespeichert werden, können insbesondere auf unterschiedliche Weise bereitgestellt werden. Anstelle der Daten, z. B. Nutzerdaten wie Messdaten oder Daten/Eigentumsverhältnisse zu Assets, kann beispielsweise eine Transaktion eines Datenblocks nur die Prüfsumme für diese Daten umfassen. Die entsprechende Prüfsumme kann dabei auf unterschiedliche Weise realisiert werden. Dies kann z. B. eine entsprechende Datenblockprüfsumme eines Datenblocks (mit den entsprechenden Daten) einer anderen Datenbank oder des verteilten Datenbanksystems sein, eine Transaktionsprüfsumme eines Datenblocks mit den entsprechenden Daten (des verteilten Datenbanksystems oder einer anderen Datenbank) oder eine Datenprüfsumme, die über die Daten gebildet wurde.

Zusätzlich kann die entsprechende Transkation noch einen Verweis oder eine Angabe zu einem Speicherort (z. B. eine Adresse eines Fileservers und Angaben, wo die entsprechenden Daten auf dem Fileserver zu finden sind; oder eine Adresse einer anderen verteilten Datenbank, welche die Daten umfasst) umfassen. Die entsprechenden Daten könnten dann beispielsweise auch in einer weiteren Transaktion eines weiteren Datenblocks des verteilten Datenbanksystems bereitgestellt werden (z. B. wenn die entsprechenden Daten und die zugehörigen Prüfsummen in unterschiedlichen Datenblöcken umfasst sind). Es ist beispielsweise aber auch denkbar, dass diese Daten über einen anderen Kommunikationskanal (z. B. über eine andere Datenbank und/oder einen kryptographisch gesicherten Kommunikationskanal) bereitgestellt werden.

Auch kann beispielsweise zusätzlich zu der Prüfsumme ein Zusatzdatensatz (z. B. ein Verweis oder eine Angabe zu einem Speicherort) in den entsprechenden Transaktionen abgelegt sein, der insbesondere einen Speicherort angibt, wo die Daten abgerufen werden können. Das ist insbesondere dahingehend vorteilhaft, um eine Datengröße der Blockkette oder des verteilten Datenbanksystems möglichst gering zu halten.

Unter "sicherheitsgeschützt" kann im Zusammenhang mit der Erfindung beispielsweise ein Schutz verstanden werden, der insbesondere durch ein kryptographisches Verfahren realisiert wird. Beispielsweise kann dies durch eine Nutzung des verteilten Datenbanksystems für das Bereitstellen oder Übertragen oder Senden von entsprechenden Daten/Transaktionen realisiert werden. Dies wird vorzugsweise durch eine Kombination der verschiedenen (kryptographischen) Prüfsummen erreicht, indem diese insbesondere synergetisch zusammenwirken, um beispielsweise die Sicherheit bzw. die kryptographische Sicherheit für die Daten der Transaktionen zu verbessern. Mit anderen Worten kann insbesondere unter "sicherheitsgeschützt" im Zusammenhang mit der Erfindung auch "kryptographisch geschützt" und/oder "manipulationsgeschützt" verstanden werden, wobei "manipulationsgeschützt" auch als "integritätsgeschützt" bezeichnet werden kann.

Unter "Verketten der/von Datenblöcken eines verteilten Datenbanksystems" kann im Zusammenhang mit der Erfindung beispielsweise verstanden werden, dass Datenblöcke jeweils eine Information (z. B. Verkettungsprüfsumme) umfassen, die auf einen anderen Datenblock oder mehrere andere Datenblöcke des verteilten Datenbanksystems verweisen bzw. diese referenzieren [1] [4] [5] .

Unter "Einfügen in das verteilte Datenbanksystem" und dergleichen kann im Zusammenhang mit der Erfindung beispielsweise verstanden werden, dass insbesondere eine Transaktion bzw. die Transaktionen oder ein Datenblock mit seinen Transaktionen an einen oder mehrere Knoten eines verteilten Datenbanksystems übermittelt wird. Werden diese Transaktionen beispielsweise erfolgreich validiert (z. B. durch den/die Knoten), werden diese Transaktionen insbesondere als neuer Datenblock mit mindestens einem vorhandenen Datenblock des verteilten Datenbanksystems verkettet [1][4][5]. Hierzu werden die entsprechenden Transaktionen beispielsweise in einem neuen Datenblock gespeichert. Insbesondere kann dieses Validieren und/oder Verketten durch einen vertrauenswürdigen Knoten (z. B. einen Mining Node, einen Blockketten-Orakel oder eine Blockketten-Plattform) erfolgen. Insbesondere kann dabei unter einer Blockketten-Plattform eine Blockkette als Dienst (engl. Blockkette als Service) verstanden werden, wie dies insbesondere durch Microsoft oder IBM vorgeschlagen wird. Insbesondere können ein vertrauenswürdiger Knoten und/oder ein Knoten jeweils eine Knoten-Prüfsumme (z. B. eine digitale Signatur) in einem Datenblock hinterlegen (z. B. in denen von ihnen validierten und erzeugten Datenblock, der dann verkettet wird), um insbesondere eine Identifizierbarkeit des Erstellers des Datenblockes zu ermöglichen und/oder eine Identifizierbarkeit des Knotens zu ermöglichen. Dabei gibt diese Knoten-Prüfsumme an, welcher Knoten beispielsweise den entsprechenden Datenblock mit mindestens einem anderen Datenblock des verteilten Datenbanksystems verkettet hat.

Unter "Transaktion" bzw. "Transaktionen" können im Zusammenhang mit der Erfindung beispielsweise ein Smart-Contract [4] [5], eine Datenstruktur oder ein Transaktionsdatensatz verstanden werden, der insbesondere jeweils eine der Transaktionen oder mehrere Transaktionen umfasst. Unter "Transaktion" bzw. "Transaktionen" können im Zusammenhang mit der Erfindung beispielsweise auch die Daten einer Transaktion eines Datenblocks einer Bockkette (engl. Blockchain) verstanden werden. Eine Transaktion kann insbesondere einen Programmcode umfassen, der beispielsweise einen Smart Contract realisiert. Beispielsweise können im Zusammenhang mit der Erfindung unter Transaktion auch eine Steuertransaktionen und/oder Bestätigungstransaktion verstanden werden. Alternativ kann eine Transaktion beispielsweise eine Datenstruktur sein, die Daten speichert (z. B. die Steuerbefehle und/oder Vertragsdaten und/oder andere Daten wie Videodaten, Nutzerdaten, Messdaten etc.). Eine "Transaktion" kann im Zusammenhang mit der Erfindung beispielsweise auch eine Nachricht oder eine Kommunikationsnachricht sein bzw. als ein solche bezeichnet werden. Entsprecht ist beispielsweise eine Nachricht eine Transaktion, wobei die Nachricht beispielsweise Steuerbefehle zum Ansteuern der Geräte umfasst und/oder auch Voraussetzungen (z. B. vorgegebene Anforderungen) für das Ausführen der Steuerbefehle umfasst.

Insbesondere ist unter "Speichern von Transaktionen in Datenblöcken", "Speichern von Transaktionen" und dergleichen ein direktes Speichern oder indirektes Speichern zu verstehen. Unter einem direkten Speichern kann dabei beispielsweise verstanden werden, dass der entsprechende Datenblock (des verteilten Datenbanksystems) oder die entsprechende Transaktion des verteilten Datenbanksystems) die jeweiligen Daten umfasst. Unter einem indirekten Speichern kann dabei beispielsweise verstanden werden, dass der entsprechende Datenblock oder die entsprechende Transaktion eine Prüfsumme und optional einen Zusatzdatensatz (z. B. einen Verweis oder eine Angabe zu einem Speicherort) für entsprechende Daten umfasst und die entsprechenden Daten somit nicht direkt in dem Datenblock (oder der Transaktion) gespeichert sind (also stattdessen nur eine Prüfsumme für diese Daten). Insbesondere können beim Speichern von Transaktionen in Datenblöcken diese Prüfsummen beispielsweise validiert werden, so wie dies beispielsweise unter "Einfügen in das verteilte Datenbanksystem" erläutert ist.

Unter einem "Programmcode" (z. B. ein Smart-Contract) kann im Zusammenhang mit der Erfindung beispielsweise ein Programmbefehl oder mehrere Programmbefehle verstanden werden, die insbesondere in einer oder mehreren Transaktionen gespeichert sind. Der Programmcode ist insbesondere ausführbar und wird beispielsweise durch das verteilte Datenbanksystem ausgeführt. Dies kann beispielsweise mittels einer Ausführungsumgebung (z. B. einer virtuellen Maschine) realisiert werden, wobei die Ausführungsumgebung bzw. der Programmcode vorzugsweise Turing-vollständig sind. Der Programmcode wird vorzugsweise durch die Infrastruktur des verteilten Datenbanksystems ausgeführt [4][5]. Dabei wird beispielsweise eine virtuelle Maschine durch die Infrastruktur des verteilten Datenbanksystems realisiert.

Unter einem "Smart Contract" kann im Zusammenhang mit der Erfindung beispielsweise ein ausführbarer Programmcode verstanden werden [4][5] (siehe insbesondere Definition "Programmcode"). Der Smart Contract ist vorzugsweise in einer Transaktion eines verteilten Datenbanksystems (z. B. eine Blockkette) gespeichert, beispielsweise in einem Datenblock des verteilten Datenbanksystems. Beispielsweise kann der Smart Contract auf die gleiche Weise ausgeführt werden, wie dies bei der Definition von "Programmcode", insbesondere im Zusammenhang mit der Erfindung, erläutert ist.

Unter "Smart-Contract-Prozess" bzw. ein "Smart-Contract" kann im Zusammenhang mit der Erfindung insbesondere auch ein Ausführen eines Programmcodes bzw. eines Smart-Contracts in einem Prozess durch das verteilte Datenbanksystem bzw. deren Infrastruktur verstanden werden.

Unter "Proof-of-Work-Nachweis" kann im Zusammenhang mit der Erfindung beispielsweise ein Lösen einer rechenintensiven Aufgabe verstanden werden, die insbesondere abhängig vom Datenblock-Inhalt/Inhalt einer bestimmten Transaktion zu lösen ist [1] [4] [5]. Eine solche rechenintensive Aufgabe wird beispielsweise auch als kryptographisches Puzzle bezeichnet.

Unter einem "verteilten Datenbanksystem", das beispielsweise auch als verteilte Datenbank bezeichnet werden kann, kann im Zusammenhang mit der Erfindung beispielsweise eine dezentral verteilte Datenbank, eine Blockkette (engl. Blockchain), ein distributed Ledger, ein verteiltes Speichersystem, ein distributed ledger technology (DLT) based system (DLTS), ein revisionssicheres Datenbanksystem, eine Cloud, ein Cloud-Service, eine Blockkette in einer Cloud oder eine Peer-to-Peer Datenbank verstanden werden. Auch können beispielsweise unterschiedliche Implementierungen einer Blockkette oder eines DLTS verwendet werden, wie z. B. eine Blockkette oder ein DLTS, die mittels eines Directed Acylic Graph (DAG), eines kryptographischen Puzzles, einem Hashgraph oder eine Kombination aus den genannten Implementierungsvarianten [6][7]. Auch können beispielsweise unterschiedliche Konsensusverfahren (engl. consensus algorithms) implementiert werden. Dies kann beispielsweise ein Konsensusverfahren mittels eines kryptographischen Puzzles, Gossip about Gossip, Virtual Voting oder eine Kombination der genannten Verfahren sein (z. B. Gossip about Gossip kombiniert mit Virtual Voting) [6][7]. Wird beispielsweise eine Blockkette verwendet, so kann diese insbesondere mittels einer Bitcoin-basierten Realisierung oder einer Ethereum-basierten Realisierung umgesetzt werden [1][4][5]. Unter einem "verteilten Datenbanksystem" kann beispielsweise auch ein verteiltes Datenbanksystem verstanden werden, von dem zumindest ein Teil seiner Knoten und/oder Geräte und/oder Infrastruktur durch eine Cloud realisiert sind. Beispielsweise sind die entsprechenden Komponenten als Knoten/Geräte in der Cloud (z. B. als virtueller Knoten in einer virtuellen Maschine) realisiert. Dies kann beispielsweise mittels VM-Ware, Amazon Web Services oder Microsoft Azure erfolgen. Aufgrund der hohen Flexibilität der erläuterten Implementierungsvarianten, können insbesondere auch Teilaspekte der genannten Implementierungsvarianten miteinander kombiniert werden, indem z. B. ein Hashgraph als Blockkette verwendet wird, wobei die Blockkette selbst z. B. auch blocklos sein kann.

Wird beispielsweise ein Directed Acylic Graph (DAG) verwendet (z. B. IOTA oder Tangle), sind insbesondere Transaktionen oder Blöcke oder Knoten des Graphen miteinander über gerichtete Kanten miteinander verbunden. Dies bedeutet insbesondere, dass Kanten (vorzugsweise alle Kanten) die gleiche Richtung (vorzugsweise immer die gleiche Richtung) haben, ähnlich wie dies z. B. bei Zeit ist. Mit anderen Worten ist es insbesondere nicht möglich rückwärts (also entgegen der gemeinsamen gleichen Richtung) die Transaktionen oder die Blöcke oder die Knoten des Graphen anzulaufen bzw. anzuspringen. Azyklisch bedeutet dabei insbesondere, dass es keine Schleifen bei einem Durchlaufen des Graphen gibt.

Bei dem verteilten Datenbanksystem kann es sich beispielsweise um ein öffentliches verteiltes Datenbanksystem (z. B. eine öffentliche Blockkette) oder ein geschlossenes (oder privates) verteiltes Datenbanksystem (z. B. eine private Blockkette) handeln.

Handelt es sich beispielsweise um ein öffentliches verteiltes Datenbanksystem, bedeutet dies, dass neue Knoten und/oder Geräte ohne Berechtigungsnachweise oder ohne Authentifizierung oder ohne Anmeldeinformationen oder ohne Credentials dem verteilten Datenbanksystem beitreten können bzw. von diesem akzeptiert werden. Insbesondere können in einem solchen Fall die Betreiber der Knoten und/oder Geräte anonym bleiben.

Handelt es sich bei dem verteilten Datenbanksystem beispielsweise um ein geschlossenes verteiltes Datenbanksystem, benötigen neue Knoten und/oder Geräte beispielsweise einen gültigen Berechtigungsnachweis und/oder gültige Authentifizierungsinformationen und/oder gültige Credentials und/oder gültige Anmeldeinformationen, um dem verteilten Datenbanksystem beitreten zu können bzw. um von diesem akzeptiert zu werden.

Bei einem verteilten Datenbanksystem kann es sich beispielsweise auch um ein verteiltes Kommunikationssystem zum Datenaustausch handeln. Dies kann beispielsweise ein Netzwerk oder ein Peer-2-Peer Netzwerk sein. Alternativ oder zusätzlich kann die Erfindung beispielsweise auch mittels einer Peer-2-Peer Applikation anstelle des verteilten Datenbanksystems realisiert werden.

Unter "Datenblock", der insbesondere je nach Kontext und Realisierung auch als "Glied" oder "Block" bezeichnet sein kann, kann im Zusammenhang mit der Erfindung beispielsweise ein Datenblock eines verteilten Datenbanksystems (z. B. eine Blocckette oder eine Peer to Peer Datenbank) verstanden werden, die insbesondere als Datenstruktur realisiert ist und vorzugsweise jeweils eine der Transaktionen oder mehrere der Transaktionen umfasst. Bei einer Implementierung kann beispielsweise die Datenbank (oder das Datenbanksystem) ein DLT basiertes System (DLTS) oder eine Blockkette sein und ein Datenblock ein Block der Blockkette oder des DLTS. Ein Datenblock kann beispielsweise Angaben zur Größe (Datengröße in Byte) des Datenblocks, einen Datenblock-Header (engl. Block-header), einen Transaktionszähler und eine oder mehrere Transaktionen umfassen [1]. Der Datenblock-Header kann beispielsweise eine Version, eine Verkettungsprüfsumme, eine Datenblockprüfsumme, einen Zeitstempel, einen Proof-of-Work Nachweis und eine Nonce (Einmalwert, Zufallswert oder Zähler, der für den Proof-of-Work Nachweis verwendet wird) umfassen [1] [4] [5]. Bei einem Datenblock kann es sich beispielsweise auch nur um einen bestimmten Speicherbereich oder Adressbereich der Gesamtdaten handeln, die in dem verteilten Datenbanksystem gespeichert sind. Damit lassen sich beispielsweise blocklose (engl. blockless) verteilte Datenbanksysteme, wie z. B. die IoT Chain (ITC), IOTA, und Byteball, realisieren. Hierbei werden insbesondere die Funktionalitäten der Blöcke einer Blockkette und der Transaktionen miteinander derart kombiniert, dass z. B. die Transaktionen selbst die Sequenz oder Kette von Transaktionen (des verteilten Datenbanksystems) absichern (also insbesondere sicherheitsgeschützt gespeichert werden). Hierzu können beispielsweise mit einer Verkettungsprüfsumme die Transaktionen selbst miteinander verkettet werden, indem vorzugsweise eine separate Prüfsumme oder die Transaktionsprüfsumme einer oder mehrerer Transaktionen als Verkettungsprüfsumme dient, die beim Speichern einer neuen Transaktion in dem verteilten Datenbanksystem in der entsprechenden neuen Transaktion mit gespeichert wird. In einer solchen Ausführungsform kann ein Datenblock beispielsweise auch eine oder mehrere Transaktionen umfassen, wobei im einfachsten Fall beispielsweise ein Datenblock einer Transaktion entspricht.

Unter "Nonce" kann im Zusammenhang mit der Erfindung beispielsweise eine kryptographische Nonce verstanden werden (Abkürzung für: "used only once"[2] oder "number used once"[3]). Insbesondere bezeichnet eine Nonce einzelne Zahlen- oder eine Buchstabenkombination, die vorzugsweise ein einziges Mal in dem jeweiligen Kontext (z. B. Transaktion, Datenübertragung) verwendet wird.

Unter "vorhergehende Datenblöcke eines (bestimmten) Datenblockes des verteilten Datenbanksystems" kann im Zusammenhang mit der Erfindung beispielsweise der Datenblock des verteilten Datenbanksystems verstanden werden, der insbesondere einem (bestimmten) Datenblock direkt vorhergeht. Alternativ können unter "vorhergehender Datenblöcke eines (bestimmten) Datenblockes des verteilten Datenbanksystems" insbesondere auch alle Datenblöcke des verteilten Datenbanksystems verstanden werden, die dem bestimmten Datenblock vorhergehen. Hierdurch kann beispielsweise die Verkettungsprüfsumme oder die Transaktionsprüfsumme insbesondere nur über den dem bestimmten Datenblock direkt vorhergehenden Datenblock (bzw. deren Transaktionen) oder über alle dem ersten Datenblock vorhergehenden Datenblöcke (bzw. deren Transaktionen) gebildet werden.

Unter einem "Blockketten-Knoten", "Knoten", "Knoten eines verteilten Datenbanksystems" und dergleichen, können im Zusammenhang mit der Erfindung beispielsweise Geräte (z. B. Feldgeräte, Mobiltelefone), Rechner, Smart-Phones, Clients oder Teilnehmer verstanden werden, die Operationen (mit) dem verteilten Datenbanksystem (z. B. eine Blockkette) durchführen [1] [4] [5]. Solche Knoten können beispielsweise Transaktionen eines verteilten Datenbanksystems bzw. deren Datenblöcke ausführen oder neue Datenblöcke mit neuen Transaktionen in das verteilte Datenbanksystem mittels neuer Datenblöcke einfügen bzw. verketten. Insbesondere kann dieses Validieren und/oder Verketten durch einen vertrauenswürdigen Knoten (z. B. einen Mining Node) oder ausschließlich durch vertrauenswürdige Knoten erfolgen. Bei einem vertrauenswürdigen Knoten handelt es sich beispielsweise um einen Knoten, der über zusätzliche Sicherheitsmaßnahmen verfügt (z. B. Firewalls, Zugangsbeschränkungen zum Knoten oder ähnliches), um eine Manipulation des Knotens zu verhindern. Alternativ oder zusätzlich kann beispielsweise ein vertrauenswürdiger Knoten beim Verketten eines neuen Datenblocks mit dem verteilten Datenbanksystem, eine Knotenprüfsumme (z. B. eine digitale Signatur oder ein Zertifikat) in dem neuen Datenblock speichern. Damit kann insbesondere ein Nachweis bereitgestellt werden, der angibt, dass der entsprechende Datenblock von einem bestimmten Knoten eingefügt wurde bzw. seine Herkunft angibt. Bei den Geräten (z. B. dem entsprechenden Gerät) handelt es sich beispielsweise um Geräte eines technischen Systems und/oder industriellen Anlage und/oder eines Automatisierungsnetzes und/oder einer Fertigungsanlage, die insbesondere auch ein Knoten des verteilten Datenbanksystems sind. Dabei können die Geräte beispielsweise Feldgeräte sein oder Geräte im Internet der Dinge sein, die insbesondere auch ein Knoten des verteilten Datenbanksystems sind. Knoten können beispielsweise auch zumindest einen Prozessor umfassen, um z. B. ihre computerimplementierte Funktionalität auszuführen.

Unter einem "Blockketten-Orakel" und dergleichen können im Zusammenhang mit der Erfindung beispielsweise Knoten, Geräte oder Rechner verstanden werden, die z. B. über ein Sicherheitsmodul verfügen, das beispielsweise mittels Software-Schutzmechanismen (z. B. kryptographische Verfahren), mechanische Schutzeinrichtungen (z. B. ein abschließbares Gehäuse) oder elektrische Schutzeinrichtungen verfügt (z. B. Tamper-Schutz oder ein Schutzsystem, das die Daten des Sicherheitsmoduls bei einer unzulässigen Nutzung/Behandlung des Bloccketten-Orakel löscht umfasst). Das Sicherheitsmodul kann dabei beispielsweise kryptographische Schlüssel umfassen, die für die Berechnung der Prüfsummen (z. B. Transaktionsprüfsummen oder Knotenprüfsummen) notwendig sind.

Unter einem "Rechner" oder einem "Gerät" kann im Zusammenhang mit der Erfindung beispielsweise ein Computer(system), ein Client, ein Smart-Phone, ein Gerät oder ein Server verstanden werden, die jeweils außerhalb der Blockkette angeordnet sind und kein Teil der Infrastruktur des verteilten Datenbanksystems sind bzw. eine separate getrennte Infrastruktur bilden. Bei einem Gerät handelt es sich beispielsweise um ein Fertigungsgerät und/oder ein elektromechanisches Gerät und/oder ein elektronisches Gerät und/oder ein Gerät eines Automatisierungsnetzwerkes (z. B. für industrielle technische Anlagen, Fertigungsanlagen, Energie- bzw. Ressourcenverteilungsanlagen), diese Geräte sind insbesondere nicht in der Lage direkt mit dem verteilten Datenbanksystem (direkt) zu kommunizieren.

Ein solches Gerät außerhalb des verteilten Datenbanksystems kann beispielsweise nicht auf die Daten des verteilten Datenbanksystems zugreifen, da das Gerät beispielsweise zu alt ist und weder über die notwendigen kryptographischen und/oder IT-Security-Fähigkeiten verfügt noch mit dem Datenformat des verteilten Datenbanksystems kompatibel ist.

Mit der Erfindung ist es insbesondere möglich eine dezentrale (blockkettenbasierte) Infrastruktur mit alten bzw. legacy Geräten zu koppeln. Mit der Erfindung kann insbesondere eine Koppelung von solchen Altgeräten an eine neue blockkettenbasierten Infrastruktur erfolgen. Dies ist beispielsweise für Energieversorgungsnetze vorteilhaft, deren Steuerung auf eine Blockketten-Infrastruktur umgestellt wird, wobei jedoch nicht jedes einzelne Gerät des bestehenden Energieversorgungsnetzes ausgetauscht wird. Die Erfindung erlaubt es beispielsweise, dass z. B. mittels einer Blockkette Nachrichten (z. B. in Transaktionen) mit Steuerbefehlen an die einzelnen Geräte gesendet werden, wobei die Empfangsvorrichtung kommunikativ zwischen den Geräten und dem verteilten Datenbanksystem angeordnet ist und die Zuordnung und/oder Übermittlung der jeweiligen Nachrichten an ein (entsprechendes) Gerät vornimmt. Insbesondere werden die entsprechenden Nachrichteninhalte auch in ein Datenformat konvertiert, das mit einem Gerät kompatibel ist. Auch kann z. B. ein Nachrichteninhalt kryptographisch überprüft werden und/oder ein kryptographischer Schutz entfernt werden (z. B. durch ein entschlüsseln des Nachrichteninhalts).

Bei einer ersten Ausführungsform der Empfangsvorrichtung ruft die Empfangsvorrichtung einen Gerätezustand (z. B. Fehlerzustand, Betriebszustand) von dem einer entsprechenden ersten Nachricht zugeordneten Gerät ab (z. B. mittels des Identifikationsmoduls oder der zweiten Kommunikationsschnittstelle), wobei eine Übertragung an das zugeordnete Gerät abhängig von dem abgerufenen Gerätezustand erfolgt.

Die Empfangsvorrichtung ist dahingehend vorteilhaft, um insbesondere vor dem Übermitteln des Nachrichteninhalts an das Gerät zu überprüfen, ob z. B. das entsprechende Gerät eingeschaltet ist oder betriebsbereit ist. Damit kann insbesondere verhindert werden, Nachrichten an Geräte zu senden, die sich in einem Fehlerzustand befinden. Wird beispielsweise eine Nachricht nicht an ein entsprechend zugeordnetes Gerät gesendet (z. B. weil dies entsprechend des Gerätezustandes nicht möglich ist), kann eine entsprechende Nachricht bzw. Transaktion, die diesen Gerätezustand (z. B. den Fehlerzustand) umfasst, an das verteilte Datenbanksystem übermittelt werden bzw. von dem verteilten Datenbanksystem gespeichert werden.

Bei weiteren Ausführungsformen der Empfangsvorrichtung umfasst der Gerätezustand einen Datensatz über die verfügbaren Geräteressourcen und/oder aktuellen Geräteeigenschaften.

Bei weiteren Ausführungsformen der Empfangsvorrichtung erfolgt eine Übertragung an das entsprechende Gerät, wenn vorgegebene Anforderungen der entsprechenden ersten Nachricht durch das zugeordnete Gerät erfüllt sind, wobei beispielsweise die Erfüllung der vorgegenen Anforderungen anhand des Gerätezustandes überprüft wird.

Die Empfangsvorrichtung ist dahingehend vorteilhaft, um insbesondere zu überprüfen, ob eine entsprechende Nachricht überhaupt von einem Gerät verarbeitet werden kann. Umfasst eine entsprechende Nachricht beispielsweise Steuerbefehle um einen Generator oder ein Reservekraftwerk anzufahren bzw. zu steuern, kann beispielsweise in den Anforderungen vorgegeben sein, dass eine bestimmte Menge an Energie mindestens erzeugt werden soll. Alternativ (also in einem anderen Anwendungsszenario) kann durch die vorgegebenen Anforderungen eine bestimmte Fertigungspräzision oder Fertigungsdauer vorgegeben werden, die eingehalten werden soll. Diese Anforderungen können beispielsweise von der Empfangsvorrichtung überprüft werden, indem die entsprechenden verfügbaren Geräteressourcen und/oder der Gerätezustand und/oder die aktuellen Geräteeigenschaften (z. B. ist das Gerät an dem richtigen Ort installiert, um z. B. keine Datenschutzvorschriften zu verletzen; ist das Gerät bzw. die vom Gerät verarbeiteten Daten vor dem Zugriff Unbefugter geschützt - z. B. kryptographisch -, um insbesondere Firmen/Fertigungs-Know-How zu schützen) überprüft werden. Diese Überprüfung der vorgegebenen Anforderungen, die z. B. einem entsprechenden Datensatz gespeichert sind, können z. B. von dem Identifikationsmodul, dem Konvertierungsmodul, der zweiten Kommunikationsschnittstelle (z. B. eine Netzwerkschnittstelle) oder einem Evaluierungsmodul der Empfangsvorrichtung, das vor der Kommunikationsschnittstelle (z. B. eine Netzwerkschnittstelle) eines Kommunikationsbusses der Empfangsvorrichtung angeordnet ist, durchgeführt werden.

Die vorgegebenen Anforderungen können beispielsweise auch vorausgesetzte Steuerbefehle sein bzw. solche umfassen, die vorausgesetzten Steuerbefehle geben beispielsweise vor, dass diese von einem der Geräte bzw. dem Gerät bereits ausgeführt sein sollen, bevor die entsprechenden Nachrichten bzw. Nachrichteninhalt (z. B. der konvertierte Nachrichteninhalt) an die Geräte übermittelt werden. Alternativ oder zusätzlich können die vorausgesetzten Steuerbefehle auch weitere Geräte betreffen, wobei die weiteren Geräte beispielsweise Geräte eines weiteren Automatisierungsnetzwerkes sind. Um z. B. zu überprüfen, ob die vorausgesetzten Steuerbefehle bereits ausgeführt sind, können beispielsweise entsprechende Nachrichten bzw. Transaktionen im verteilten Datenbanksystem ausgelesen bzw. überprüft werden, die beispielsweise eine Ausführung der vorausgesetzten Steuerbefehle bestätigen. Diese entsprechenden Nachrichten bzw. Transaktionen können beispielsweise als Bestätigungstransaktionen bezeichnet werden und werden von den entsprechenden Geräten beispielsweise nach einer Ausführung der vorausgesetzen Steuerbefehle, z. B. mittels der Sendevorrichtung, in dem verteilten Datenbanksystem gespeichert.

Bei weiteren Ausführungsformen der Empfangsvorrichtung umfasst die Empfangsvorrichtung ein Kryptographiemodul, wobei das Kryptographiemodul den Geräten zugeordnete kryptographische Daten umfasst.

Bei weiteren Ausführungsformen der Empfangsvorrichtung überprüft und/oder entschlüsselt das Kryptographiemodul anhand der kryptographischen Daten zumindest einen Teil des Nachrichteninhalts der entsprechenden ersten Nachricht für ein zugeordnetes Gerät, wobei beispielsweise für das Überprüfen und/oder das Entschlüsseln die entsprechenden kryptographischen Daten anhand des zugeordneten Gerätes geladen werden.

Die Empfangsvorrichtung ist dahingehend vorteilhaft, um insbesondere die Nachrichten die an ein entsprechendes Gerät übermittelt werden sollen zu überprüfen. Hierzu kann der Nachrichtenersteller beispielsweise einen ersten kryptographischen Schlüssel erhalten haben, mit dem beispielsweise eine Prüfsumme (z. B. eine Transaktionsprüfsumme oder eine andere der genannten Prüfsummen) über die Nachrichten bzw. den Nachrichteninhalt gebildet wurde. Alternativ kann mit diesem ersten kryptographischen Schlüssel beispielsweise auch der Nachrichteninhalt verschlüsselt worden sein. Beispielsweise kann mit dem ersten kryptographischen Schlüssel (im Falle eines symmetrischen kryptographischen Verfahrens) oder einem zweiten kryptographischen Schlüssel, der dem ersten kryptographischen Schlüssel zugeordnet ist (z. B. bei einem asymmetrischen kryptographischen Verfahren bei dem z. B. der erste Schlüssel ein privater Schlüssel ist und der zweite Schlüssel ein öffentlicher Schlüssel ist), die Entschlüsselung oder Überprüfung des entsprechenden Nachrichteninhalts erfolgen.

Die kryptographischen Daten (z. B. die kryptographischen Schlüssel) können beispielsweise anhand von gerätespezifischen Daten spezifisch für ein Gerät erzeugt worden sein (z. B. eine UID des Gerätes, einer Zufallszahl, die durch das entsprechende Gerät erzeugt wurde, oder wurde anhand von für das Gerät charakteristischen Sensordaten berechnet - z. B. eine berechnete Charakteristik für ein Rauschsignal, das durch einen Sensor des Gerätes ermittelt wurde). Alternativ oder zusätzlich sind die kryptographischen Daten eine Kombination aus gerätespezifischen Daten und empfangsvorrichtungsspezifischer Daten (z. B. eine UID der Empfangsvorrichtung, einer Zufallszahl, die durch die Empfangsvorrichtung erzeugt wurde, oder anhand von für die Empfangsvorrichtung Sensordaten berechnet wurde - z. B. eine berechnete Charakteristik für ein Rauschsignal, das durch einen Sensor der Empfangsvorrichtung ermittelt wurde). Beispielsweise ist es auch möglich, dass mittels der gerätespezifischen Daten und/oder empfangsvorrichtungsspezifischer Daten für das entsprechende Gerät die kryptographischen Daten reproduzierbar ermittelt werden oder mittels dieser Daten ein kryptographischer Schutz (z. B. eine Verschlüsselung), mit dem die entsprechenden kryptographischen Daten eines Gerätes geschützt sind, aufgehoben (z. B. entschlüsselt werden) und/oder überprüft werden (z. B. eine digitale Signatur überprüft wird). Die gerätespezifischen Daten können beispielsweis beim Abrufen des Gerätezustandes für ein Gerät mit abgerufen werden. Bei den gerätespezifischen Daten und/oder empfangsvorrichtungsspezifischer Daten handelt es sich vorzugsweise um Daten, die nur schwer gefälscht werden können, z. B. eine Charakteristik eines Rauschsignals (das z. B. von einem Sensor oder einem Manipulationsschutzmodul erfasst wird), das bei einer Manipulation des Gerätes derart verändert wird, dass sich die Charakteristik derart verändert, dass die kryptographischen Daten ungültig werden oder auf diese nicht mehr zugegriffen werden kann. Die gerätespezifischen Daten können auch mittels eines Challenge-Response-Verfahren ermittelt bzw. ausgetauscht werden, indem beispielsweise das Verfahren auf Geräteseite und auf Empfangsvorrichtungsseite mit entsprechenden Initialwerten konfiguriert wird (z. B. indem in einem geschützten Speicher des Gerätes bzw. der Empfangsvorrichtung entsprechende Initialwerte vorkonfiguriert sind bzw. diese Initialwerte durch den geschützten Speicher berechnet und/oder bereitgestellt werden) und entsprechende gerätespezifischen Daten (z. B. ein kryptographischer Schlüssel oder ein Teil eines kryptographischen Schlüssels) von der Empfangsvorrichtung abgerufen werden können.

Gemäß einem weiteren Aspekt betrifft die Erfindung eine Sendevorrichtung, aufweisend
- beispielsweise eine erste Kommunikationsschnittstelle, wobei
   - beispielsweise die erste Kommunikationsschnittstelle dazu eingerichtet ist mit Geräten zu kommunizieren,
   - beispielsweise die Kommunikationsschnittstelle dazu eingerichtet ist erste Nachrichten von den Geräten zu empfangen;
- beispielsweise ein Identifikationsmodul, wobei
   - beispielsweise das Identifikationsmodul dazu eingerichtet ist anhand des jeweiligen Nachrichteninhalts der ersten Nachrichten eine Zuordnung berechnet, welches Gerät eine entsprechende erste Nachricht gesendet hat;
- beispielsweise ein Konvertierungsmodul, wobei
   - beispielsweise das Konvertierungsmodul dazu eingerichtet ist den Nachrichteninhalt der entsprechenden ersten Nachricht in ein Datenformat für das verteilte Datenbanksystem zu konvertieren;
- beispielsweise eine zweite Kommunikationsschnittstelle, wobei
   - beispielsweise die zweite Kommunikationsschnittstelle dazu eingerichtet ist mit einem verteilten Datenbanksystem kommunizieren,
   - beispielsweise die Kommunikationsschnittstelle dazu eingerichtet ist den konvertierten Nachrichteninhalt und/oder den Nachrichteninhalt der entsprechenden ersten Nachricht (und/oder die erste Nachricht selbst) an das verteilte Datenbanksystem zu übertragen.

Mit der Erfindung ist es insbesondere möglich eine dezentrale Infrastruktur mit alten bzw. legacy Geräten zu koppeln. Mit der Erfindung kann insbesondere eine Koppelung von solchen Altgeräten an eine neue blockkettenbasierten Infrastruktur erfolgen. Dies ist beispielsweise für Energieversorgungsnetze vorteilhaft, deren Steuerung auf eine Blockketten Infrastruktur umgestellt wird, wobei jedoch nicht jedes einzelne Gerät des bestehenden Energieversorgungsnetzes ausgetauscht wird. Die Erfindung erlaubt es beispielsweise, dass z. B. ein Gerät Nachrichten (z. B. mit Steuerbefehlen oder Statusmeldungen zur Abarbeitung von Steuerbefehlen) an das verteilte Datenbanksystem sendet, wobei die Sendevorrichtung kommunikativ zwischen den Geräten und dem verteilten Datenbanksystem angeordnet ist und die Zuordnung und/oder Übermittlung der jeweiligen Nachrichten an das verteilte Datenbanksystem realisiert. Insbesondere werden die entsprechenden Nachrichteninhalte auch in ein Datenformat konvertiert, das mit dem verteilten Datenbanksystem kompatibel ist. Insbesondere müssen die Geräte nicht an die neue Infrastruktur angepasst werden.

Bei weiteren Ausführungsformen der Sendevorrichtung umfasst die Sendevorrichtung ein Kryptographiemodul, wobei das Kryptographiemodul den Geräten zugeordnete kryptographische Daten umfasst.

Bei weiteren Ausführungsformen der Sendevorrichtung lädt das Kryptographiemodul anhand des zugeordneten Gerätes entsprechende kryptographische Daten, wobei mittels der entsprechenden kryptographischen Daten (die vorzugsweise gerätespezifisch sind) zumindest ein Teil des Nachrichteninhalts der entsprechenden ersten Nachricht gerätespezifischen für das zugeordnete Geräte kryptographisch geschützt werden und wobei beispielsweise das kryptographische Schützen vor dem Senden des Nachrichteninhalts erfolgt.

Die Sendevorrichtung ist dahingehend vorteilhaft, um insbesondere die Nachrichten, die an das verteilte Datenbanksystem gesendet werden (und/oder von diesem gespeichert werden) kryptographisch zu schützen. Dies kann beispielsweise dadurch erfolgen, dass der entsprechende Nachrichteninhalt mittels einer (kryptographischen) Prüfsumme (z. B. eine Transaktionsprüfsumme) geschützt wird und/oder verschlüsselt wird. Hierzu kann die Sendevorrichtung beispielsweise einen ersten kryptographischen Schlüssel (diese ist z. B. spezifisch für das Gerät) umfassen, mit dem beispielsweise eine Prüfsumme über die Nachrichten bzw. den Nachrichteninhalt gebildet wird. Alternativ kann mit diesem ersten kryptographischen Schlüssel beispielsweise auch der Nachrichteninhalt verschlüsselt werden. Ein Empfänger der Nachricht kann beispielsweise mit dem ersten kryptographischen Schlüssel (im Falle eines symmetrischen kryptographischen Verfahrens) oder einem zweiten kryptographischen Schlüssel, der dem ersten kryptographischen Schlüssel zugeordnet ist (z. B. bei einem asymmetrischen kryptographischen Verfahren bei dem z. B. der erste Schlüssel ein privater Schlüssel ist und der zweite Schlüssel ein öffentlicher Schlüssel ist), die Entschlüsselung oder Überprüfung des entsprechenden Nachrichteninhalts durchführen. Hier kann das entsprechende Schlüsselmaterial dem Empfänger beispielsweise über einen sicheren Kanal übermittelt worden sein.

Die kryptographischen Daten (z. B. die kryptographischen Schlüssel) können beispielsweise anhand von gerätespezifischen Daten erzeugt worden sein (z. B. eine UID des Gerätes, einer Zufallszahl, die durch das entsprechende Gerät erzeugt wurde, oder anhand von für das Gerät charakteristischen Sensordaten berechnet wurde - z. B. eine berechnete Charakteristik für ein Rauschsignal, das durch einen Sensor des Gerätes ermittelt wurde). Alternativ oder zusätzlich sind die kryptographischen Daten eine Kombination aus gerätespezifischen Daten und sendevorrichtungsspezifischer Daten (z. B. eine UID der Sendevorrichtung, einer Zufallszahl, die durch die Sendevorrichtung erzeugt wurde, oder anhand von für die Sendevorrichtung Sensordaten berechnet wurde - z. B. eine berechnete Charakteristik für ein Rauschsignal, das durch einen Sensor der Sendevorrichtung ermittelt wurde). Beispielsweise ist es auch möglich, dass mittels der gerätespezifischen Daten und/oder sendevorrichtungsspezifischer Daten für das entsprechende Gerät die kryptographischen Daten reproduzierbar ermittelt werden. Beispielsweise kann mittels der gerätespezifischen Daten und/oder sendevorrichtungsspezifischer Daten ein kryptographischer Schutz (z. B. eine Verschlüsselung), mit dem die entsprechenden kryptographischen Daten eines Gerätes geschützt sind, aufgehoben (z. B. entschlüsselt werden) und/oder überprüft werden (z. B. eine digitale Signatur überprüft wird oder eine (kryptographische) Prüfsumme für die kryptographischen Daten überprüft wird), wenn z. B. aus den gerätespezifischen Daten und/oder sendevorrichtungsspezifischer Daten hierfür ein separater kryptographischer Schlüssel abgeleitet bzw. berechnet wird. Die gerätespezifischen Daten können beispielsweise in der Nachricht des entsprechenden Gerätes gespeichert sein. Bei den gerätespezifischen Daten und/oder sendevorrichtungsspezifischen Daten handelt es sich vorzugsweise um Daten die nur schwer gefälscht werden können, z. B. eine Charakteristik eines Rauschsignals (z. B. von einem Sensor oder einem Manipulationsschutzmodul erfasst wird), das bei einer Manipulation des Gerätes derart verändert wird, dass sich die Charakteristik derart verändert, dass die kryptographischen Daten ungültig werden oder auf diese nicht mehr zugegriffen werden kann. Die gerätespezifischen Daten können auch mittels eines Challenge-Response-Verfahren ermittelt bzw. ausgetauscht werden, indem beispielsweise das Verfahren auf Geräteseite und auf Sendevorrichtungsseite mit entsprechenden Initialwerten konfiguriert wird (z. B. indem in einem geschützten Speicher des Gerätes bzw. der Sendevorrichtung entsprechende Initialwerte vorkonfiguriert sind bzw. diese Initialwerte durch den geschützten Speicher berechnet und/oder bereitgestellt werden) und entsprechende gerätespezifischen Daten (z. B. ein kryptographischer Schlüssel oder ein Teil eines kryptographischen Schlüssels) von der Sendevorrichtung abgerufen werden können.

Bei weiteren Ausführungsformen der Sendevorrichtung und/oder der Empfangsvorrichtung ist das verteilte Datenbanksystem eine Blockkette, wobei beispielsweise die Nachrichten die von dem verteilten Datenbanksystem gesendet und/oder empfangen werden Transaktionen sind.

Bei weiteren Ausführungsformen der Sendevorrichtung und/oder der Empfangsvorrichtung sind zumindest ein Teil der Geräte, Geräte eines Automatisierungsnetzwerkes.

Gemäß einem weiteren Aspekt betrifft die Erfindung ein System umfassend:
- beispielsweise eine erfindungsgemäße Empfangsvorrichtung bzw. eine Empfangsvorrichtung nach einer der genannten Ausführungsformen;
- beispielsweise eine erfindungsgemäße Sendevorrichtung bzw. eine Sendevorrichtung nach einer der genannten Ausführungsformen.

Gemäß einem weiteren Aspekt betrifft die Erfindung ein Verfahren zum rechnergestützten Empfangen von Nachrichten mit folgenden Verfahrensschritten:
- beispielsweise ein Verfahrensschritt zum Empfangen von ersten Nachrichten von einem verteilten Datenbanksystem mittels einer ersten Kommunikationsschnittstelle;
- beispielsweise ein Verfahrensschritt zum Berechnen einer Zuordnung für die ersten Nachrichten, wobei beim Berechnen bestimmt wird für welche Geräte eine entsprechende erste Nachricht bestimmt ist;
- beispielsweise ein Verfahrensschritt zum Konvertieren des Nachrichteninhalt der entsprechenden ersten Nachricht in ein Datenformat für das zugeordnete Gerät;
- beispielsweise ein Verfahrensschritt zum Übertragen des konvertierten Nachrichteninhalts an das Gerät, das der entsprechenden ersten Nachricht zugeordnet ist.

Bei weiteren Ausführungsformen des Verfahrens umfasst das Verfahren weitere Verfahrensschritte, um die funktionalen Merkmale oder um weitere Merkmale der Empfangsvorrichtung bzw. deren Ausführungsformen zu realisieren.

Gemäß einem weiteren Aspekt betrifft die Erfindung ein Verfahren zum rechnergestützten Senden von Nachrichten mit folgenden Verfahrensschritten:
- beispielsweise ein Verfahrensschritt zum Empfangen von ersten (weiteren) Nachrichten von Geräten mittels einer Kommunikationsschnittstelle;
- beispielsweise ein Verfahrensschritt zum Berechnen einer Zuordnung anhand des jeweiligen Nachrichteninhalts der ersten (weiteren) Nachrichten, wobei berechnet wird, welches Gerät eine entsprechende erste weitere Nachricht gesendet hat;
- beispielsweise ein Verfahrensschritt zum Konvertieren des Nachrichteninhalts der entsprechenden ersten (weiteren) Nachricht in ein Datenformat für das verteilte Datenbanksystem;
- beispielsweise ein Verfahrensschritt zum Übertragen des konvertierten Nachrichteninhalts an das verteilte Datenbanksystem.

Bei weiteren Ausführungsformen des Verfahrens umfasst das Verfahren weitere Verfahrensschritte, um die funktionalen Merkmale oder um weitere Merkmale der Sendevorrichtung bzw. deren Ausführungsformen zu realisieren.

Des Weiteren wird ein Computerprogrammprodukt mit Programmbefehlen zur Durchführung der genannten erfindungsgemäßen Verfahren beansprucht, wobei mittels des Computerprogrammprodukts jeweils eines der erfindungsgemäßen Verfahren, alle erfindungsgemäßen Verfahren oder eine Kombination der erfindungsgemäßen Verfahren durchführbar ist.

Zusätzlich wird eine Variante des Computerprogrammproduktes mit Programmbefehlen zur Konfiguration eines Erstellungsgeräts, beispielsweise ein 3D-Drucker, ein Computersystem oder ein zur Erstellung von Prozessoren und/oder Geräten geeignete Herstellungsmaschine, beansprucht, wobei das Erstellungsgerät mit den Programmbefehlen derart konfiguriert wird, dass die genannte erfindungsgemäße Sendevorrichtung und/oder Empfangsvorrichtung erstellt wird.

Darüber hinaus wird eine Bereitstellungsvorrichtung zum Speichern und/oder Bereitstellen des Computerprogrammprodukts beansprucht. Die Bereitstellungsvorrichtung ist beispielsweise ein Datenträger, der das Computerprogrammprodukt speichert und/oder bereitstellt. Alternativ und/oder zusätzlich ist die Bereitstellungsvorrichtung beispielsweise ein Netzwerkdienst, ein Computersystem, ein Serversystem, insbesondere ein verteiltes Computersystem, ein cloudbasiertes Rechnersystem und/oder virtuelles Rechnersystem, welches das Computerprogrammprodukt vorzugsweise in Form eines Datenstroms speichert und/oder bereitstellt.

Diese Bereitstellung erfolgt beispielsweise als Download in Form eines Programmdatenblocks und/oder Befehlsdatenblocks, vorzugsweise als Datei, insbesondere als Downloaddatei, oder als Datenstrom, insbesondere als Downloaddatenstrom, des vollständigen Computerprogrammprodukts. Diese Bereitstellung kann beispielsweise aber auch als partieller Download erfolgen, der aus mehreren Teilen besteht und insbesondere über ein Peer-to-Peer Netzwerk heruntergeladen oder als Datenstrom bereitgestellt wird. Ein solches Computerprogrammprodukt wird beispielsweise unter Verwendung der Bereitstellungsvorrichtung in Form des Datenträgers in ein System eingelesen und führt die Programmbefehle aus, sodass das erfindungsgemäße Verfahren auf einem Computer zur Ausführung gebracht wird oder das Erstellungsgerät derart konfiguriert, dass es die erfindungsgemäße Sendevorrichtung und/oder die Empfangsvorrichtung erstellt.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung der Ausführungsbeispiele, die im Zusammenhang mit den Figuren näher erläutert werden. Dabei zeigen in schematischer Darstellung:
- Fig. 1: ein erstes Ausführungsbeispiel der Erfindung;
- Fig. 2: ein weiteres Ausführungsbeispiel der Erfindung;
- Fig. 3: ein weiteres Ausführungsbeispiel der Erfindung;
- Fig. 4: ein weiteres Ausführungsbeispiel der Erfindung; und
- Fig. 5: ein weiteres Ausführungsbeispiel der Erfindung.

In den Figuren sind funktionsgleiche Elemente mit denselben Bezugszeichen versehen, sofern nichts anderes angegeben ist.

Die nachfolgenden Ausführungsbeispiele weisen, sofern nicht anders angegeben oder bereits angegeben, zumindest einen Prozessor und/oder eine Speichereinheit auf, um das Verfahren zu implementieren oder auszuführen.

Auch sind insbesondere einem (einschlägigen) Fachmann in Kenntnis des/der Verfahrensanspruchs/Verfahrensansprüche alle im Stand der Technik üblichen Möglichkeiten zur Realisierung von Produkten oder Möglichkeiten zur Implementierung selbstverständlich bekannt, sodass es insbesondere einer eigenständigen Offenbarung in der Beschreibung nicht bedarf. Insbesondere können diese gebräuchlichen und dem Fachmann bekannten Realisierungsvarianten ausschließlich per Hardware (komponenten) oder ausschließlich per Software (komponenten) realisiert werden. Alternativ und/oder zusätzlich kann der Fachmann im Rahmen seines fachmännischen Könnens weitestgehend beliebige erfindungsgemäße Kombinationen aus Hardware(komponenten) und Software(komponenten) wählen, um erfindungsgemäße Realisierungsvarianten umzusetzen.

Eine erfindungsgemäße Kombination aus Hardware(komponenten) und Software(komponenten) kann insbesondere dann eintreten, wenn ein Teil der erfindungsgemäßen Wirkungen vorzugsweise ausschließlich durch Spezialhardware (z. B. einem Prozessor in Form eines ASIC oder FPGA) und/oder ein anderer Teil durch die (prozessor- und/oder speichergestützte) Software bewirkt wird.

Insbesondere ist es angesichts der hohen Anzahl an unterschiedlichen Realisierungsmöglichkeiten unmöglich und auch für das Verständnis der Erfindung nicht zielführend oder notwendig, all diese Realisierungsmöglichkeiten zu benennen. Insofern sollen insbesondere all die nachfolgenden Ausführungsbeispiele lediglich beispielhaft einige Wege aufzeigen, wie insbesondere solche Realisierungen der erfindungsgemäßen Lehre aussehen könnten.

Folglich sind insbesondere die Merkmale der einzelnen Ausführungsbeispiele nicht auf das jeweilige Ausführungsbeispiel beschränkt, sondern beziehen sich insbesondere auf die Erfindung im Allgemeinen. Entsprechend können vorzugsweise Merkmale eines Ausführungsbeispiels auch als Merkmale für ein anderes Ausführungsbeispiel dienen, insbesondere ohne dass dies expliziert in dem jeweiligen Ausführungsbeispiel genannt sein muss.

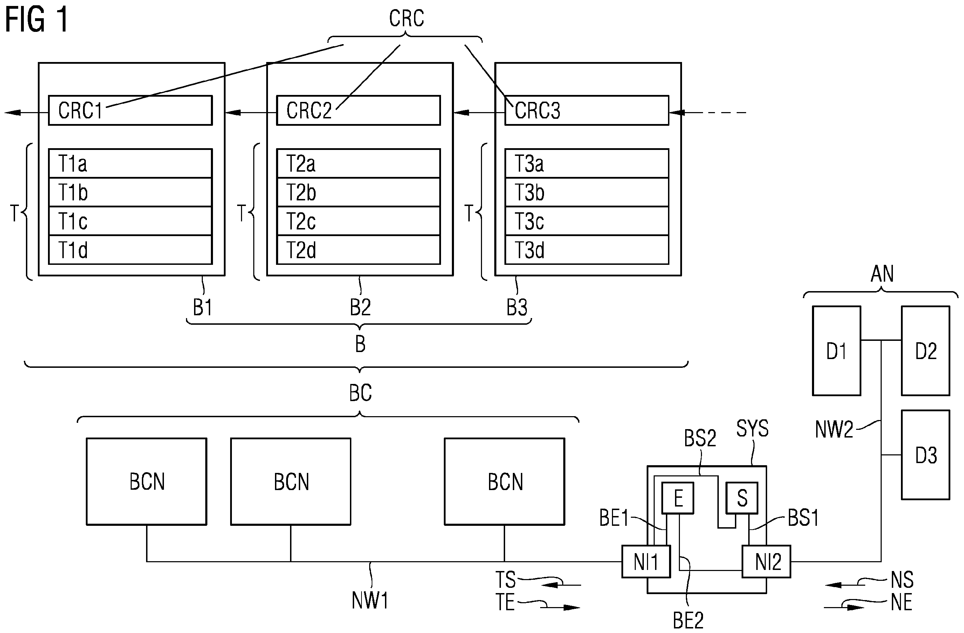

Die Fig. 1 zeigt ein erstes Ausführungsbeispiel der Erfindung. Fig. 1 zeigt dabei ein System SYS das eine Sendevorrichtung S und eine Empfangsvorrichtung E umfasst. Zusätzlich zeigt Fig. 1 ein Automatisierungsnetzwerk AN mit einem ersten Gerät D1, einem zweiten Gerät D2 und einem dritten Gerät D3. Die Geräte (D1, D2, D3) des Automatisierungsnetzwerkes (das auch als Automatisierungsnetz bezeichnet sein kann) sind über ein zweites Netzwerk NW2 (z. B. ein Kommunikationsnetzwerk wie das Internet oder ein Ethernet-Netzwerk) miteinander kommunikativ verbunden.

Des Weiteren zeigt die Fig. 1 Blöcke B, beispielsweise einen ersten Block B1, einen zweiten Block B2 und einen dritten Block B3, einer Blockkette BC, wobei hier insbesondere ein Ausschnitt der Blockkette BC exemplarisch gezeigt ist.

Die Blöcke B umfassen jeweils mehrere Transaktionen T. Die Transaktionen T können dabei Steuertransaktionen und/oder Bestätigungstransaktionen umfassen.

Der erste Block B1 umfasst beispielsweise eine erste Transaktion T1a, eine zweite Transaktion T1b, eine dritte Transaktion T1c und eine vierte Transaktion T1d.

Der zweite Block B2 umfasst beispielsweise eine fünfte Transaktion T2a, eine sechste Transaktion T2b, eine siebte Transaktion T2c und eine achte Transaktion T2d.

Der dritte Block B3 umfasst beispielsweise eine neunte Transaktion T3a, eine zehnte Transaktion T3b, eine elfte Transaktion T3c und eine zwölfte Transaktion T3d.

Die Blöcke B umfassen jeweils zusätzlich noch eine der Verkettungsprüfsummen CRC, die abhängig vom direkten Vorgänger-Block gebildet wird. Somit umfasst der erste Block B1 eine erste Verkettungsprüfsumme CRC1 von seinem Vorgänger-Block, der zweite Block B2 eine zweite Verkettungsprüfsumme CRC2 vom ersten Block B1, und der dritte Block B3 eine dritte Verkettungsprüfsumme CRC3 vom zweiten Block B2.

Die jeweilige Verkettungsprüfsumme CRC1, CRC2, CRC3 wird vorzugsweise über den Block-Header des entsprechenden Vorgängerblockes gebildet. Die Verkettungsprüfsummen CRC können vorzugsweise unter Verwendung einer kryptographischen HashFunktion wie z.B. SHA-256, KECCAK-256 oder SHA-3 gebildet werden. Beispielsweise kann die Verkettungsprüfsumme zusätzlich über die Datenblockprüfsumme berechnet werden oder der Header umfasst die Datenblockprüfsumme (die Datenblockprüfsumme ist im Nachgang erläutert).

Zusätzlich kann jeder der Blöcke eine Datenblockprüfsumme umfassen. Diese kann beispielsweise mittels eines Hash-Baumes realisiert werden.

Um den Hash-Baum zu bilden, wird für jede Transaktion eines Daten(blockes) eine Transaktionsprüfsumme (z. B. ebenfalls ein Hash-Wert) berechnet. Alternativ oder zusätzlich kann eine Transaktionsprüfsumme, die vom Erzeuger der Transaktion vorzugsweise beim Erzeugen der Transaktion erstellt wurde, hierfür weiterverwendet werden.

Üblicherweise wird für einen Hash-Baum, z. B. ein Merkle Tree oder Patricia Tree, verwendet, dessen Wurzel-Hash-Wert/Wurzel-Prüfsumme vorzugsweise als entsprechende Datenblockprüfsumme in den jeweiligen Blöcken hinterlegt wird.

In einer Variante wird die Datenblockprüfsumme als Verkettungsprüfsumme verwendet.

Ein Block kann weiterhin einen Zeitstempel, eine digitale Signatur, einen Proof-of-Work-Nachweis aufweisen, so wie es in den Ausführungsformen der Erfindung erläutert wurde.

Die Blockkette BC selbst wird durch eine Blockketten-Infrastruktur mit mehreren Blockketten-Knoten BCN, realisiert. Bei den Knoten kann es sich beispielsweise um Blocckettenorakel oder vertrauenswürdige Knoten oder ein System SYS handeln. Die Knoten sind über ein erstes Netzwerk NW1 (z. B. ein Kommunikationsnetzwerk wie das Internet oder ein Ethernet-Netzwerk) miteinander kommunikativ verbunden. Mittels der Blockketten-Infrastruktur werden beispielsweise zumindest ein Teil der Datenblöcke B oder alle Datenblöcke B der Blockkette BC für einen Teil oder alle Knoten der Blocckette repliziert.

Mittels des Systems SYS ist das Automatisierungsnetzwerk AN mit dem verteilten Datenbanksystem verbunden. Hierzu umfasst das System SYS neben der Sendevorrichtung S und der Empfangsvorrichtung E eine erste Kommunikationsschnittstelle NI1, die mit dem ersten Netzwerk NW1 verbunden ist und damit eine Kommunikationsverbindung mit dem verteilten Datenbanksystem realisiert. Zudem umfasst das System SYS eine zweite Kommunikationsschnittstelle NI2, die mit dem zweiten Netzwerk NW2 verbunden ist und damit eine Kommunikationsverbindung mit dem Automatisierungsnetzwerk AN realisiert.

Die Empfangsvorrichtung E ist über einen ersten Bus BE1 mit der ersten Kommunikationsschnittstelle NI1 kommunikativ verbunden und über einen zweiten Bus BE2 mit der zweiten Kommunikationsschnittstelle NI2 kommunikativ verbunden.

Die Sendevorrichtung S ist über einen dritten Bus BS1 mit der zweiten Kommunikationsschnittstelle NI2 kommunikativ verbunden und über einen vierten Bus BS2 mit der ersten Kommunikationsschnittstelle NI1 kommunikativ verbunden.

Vorzugsweise unterbindet das System SYS bzw. die Sendevorrichtung S und/oder die Empfangsvorrichtung E eine direkte Kommunikation zwischen den Automatisierungsnetzwerk AN und dem verteilten Datenbanksystem (z. B. als Blockchain BC realisiert). Dies ist vorteilhaft, da es sich bei dem Automatisierungsnetzwerk AN mit den Geräten (D1, D2, D3) um ein altes System handeln kann, dessen Betrieb beispielsweise gestört werden kann, wenn die Nachrichten des verteilten Datenbanksystems direkt in das Automatisierungsnetzwerk übertragen werden. Probleme können hierbei beispielsweise hinsichtlich der Bandbreite auftreten, sodass die Kommunikation zwischen den Geräten (D1-D3) z. B. wegen einer hohen Netzwerklast (die durch die Nachrichten des verteilten Datenbanksystems erzeugt werden) des zweiten Netzwerkes NW2 eingeschränkt oder gestört wird. Zusätzlich kann der Betrieb der Geräte beispielsweise gestört werden, da die Geräte Nachrichten empfangen, die in einem für sie nicht verarbeitbaren bzw. nicht zu verarbeitenden Datenformat vorliegen.

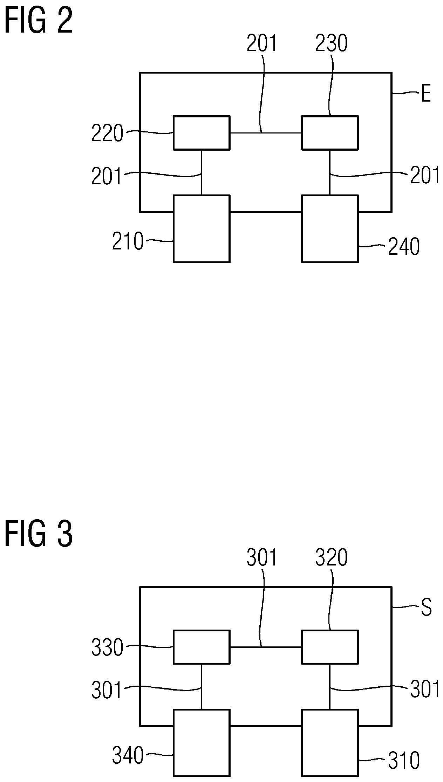

Die Fig. 2 und die Fig. 3 erläutern detailliert die Funktionsweise der Sendevorrichtung S (Fig. 3) und der Empfangsvorrichtung E (Fig. 2).

Je nach Implementierungsvariante kann das System SYS auch die Sendevorrichtung S oder die Empfangsvorrichtung E umfassen. Sollte das System SYS die Sendevorrichtung S umfassen (also ohne die Empfangsvorrichtung E, dabei entspricht dann die Sendevorrichtung S dem System SYS), ist ein solches System dahingehend vorteilhaft, um beispielsweise (nur) ein Senden der Nachrichten von den Geräten zu erlauben. Dies kann der Fall sein, wenn die Geräte z. B. Statusinformationen senden oder Steuerbefehle senden, aber keine Informationen von dem verteilten Datenbanksystem verarbeiten sollen/müssen. Sollte das System SYS beispielsweise eine Empfangsvorrichtung E umfassen (ohne die Sendevorrichtung S, dabei entspricht die Empfangsvorrichtung E dem System SYS), so kann dies vorteilhaft sein, wenn die Geräte (D1-D3) beispielsweise nur Daten empfangen sollen und diese abarbeiten ohne dabei Nachrichten zurück zum verteilten Datenbanksystem zu schicken/übertragen. Beispielsweise könnten in einem solchen Fall Informationen über den Status der Verarbeitung der Nachrichten durch die Geräte über einen anderen Kommunikationskanal übertragen werden (z. B. mittels Sensoren die über ein drittes Kommunikationsnetzwerk oder über das erste Kommunikationsnetzwerk mit dem verteilten Datenbanksystem verbunden sind).

Die Empfangsvorrichtung E umfasst eine erste Kommunikationsschnittstelle 210 (z. B. eine Netzwerkschnittstelle zu einem Ethernetnetzwerk), ein Identifikationsmodul 220, ein Konvertierungsmodul 230 und eine zweite Kommunikationsschnittstelle 240 (z. B. eine Netzwerkschnittstelle zu einem Ethernetnetzwerk), die über einen Bus 201 miteinander kommunikativ verbunden sind.

Die Empfangsvorrichtung E ist über einen ersten Bus BE1 mit der ersten Kommunikationsschnittstelle NI1 kommunikativ verbunden und über einen zweiten Bus BE2 mit der zweiten Kommunikationsschnittstelle NI2 kommunikativ verbunden.

Die erste Kommunikationsschnittstelle 210 ist dazu eingerichtet ist mit einem verteilten Datenbanksystem kommunizieren und ist mit dem ersten Bus BE1 verbunden. Damit ist die erste Kommunikationsschnittstelle 210 über den ersten Bus BE1 mit der ersten Kommunikationsschnittstelle NI1 des Systems SYS kommunikativ verbunden. Zudem ist die erste Kommunikationsschnittstelle dazu eingerichtet erste Nachrichten (z. B. die erste Transaktion T1a und/oder weitere Transaktionen des ersten Blocks B1) von dem verteilten Datenbanksystem zu empfangen. Die ersten Nachrichten sind beispielsweise in einem Datenformat (z. B. ein XML-Datenformat) des verteilten Datenbanksystems gespeichert.

Das Identifikationsmodul ist dazu eingerichtet anhand des jeweiligen Nachrichteninhalts der ersten Nachrichten eine Zuordnung zu berechnen, für welche Geräte eine entsprechende erste Nachricht TE bestimmt ist. Beispielsweise kann ein entsprechender Nachrichteninhalt eine digitale Signatur, ein digitales Zertifikat, eine Geräteadresse (z. B. eine Netzwerkadresse), eine bestimmte technische Aufgabe, einen eindeutigen Identifizierer (z. B. eine UID) oder eine Kombination hiervon umfassen, anhand dessen das Gerät oder die Geräte bestimmt werden können. Beispielsweise kann die Nachricht bzw. der Nachrichteninhalt eine Angabe umfassen, dass die Geräte eine bestimmte technische Aufgabe erfüllen sollen. Das Identifikationsmodul 220 identifiziert dann welche Geräte für die Erfüllung dieser Aufgabe geeignet sind. Beispielsweise kann die Aufgabe sein, dass ein Reservekraftwerk innerhalb einer vorgegebenen Zeit (z. B. 4 Stunden) für einen vorgegebenen Zeitraum (z. B. 24 Stunden) eine vorgegebene Leistung (z. B. 500 MW) erbringen soll. Das Identifikationsmodul 220 bestimmt dann die Geräte die für eine Umsetzung einer solchen Aufgabe notwendig sind. Beispielsweise kann das erste Gerät D1 eine Gasturbine mit 200 MW Leistung sein, das zweite Gerät eine Gastrubine mit 200 MW Leistung sein und das dritte Gerät eine Gasturbine mit 200 MW Leistung sein. Ist das Automatisierungsnetzwerk bzw. sind die Geräte in der Lage die Aufgabe zu erfüllen, wird eine entsprechende Bestätigungsnachricht an das verteilte Datenbanksystem geschickt. Ist das Automatisierungsnetzwerk bzw. sind die Geräte nicht in der Lage die Aufgabe zu erfüllen, wird eine entsprechende Ablehnungsnachricht für die Aufgabe an das verteilte Datenbanksystem geschickt.

Das Konvertierungsmodul 230 ist dazu eingerichtet den Nachrichteninhalt der entsprechenden ersten Nachricht TE in ein Datenformat für das zugeordnete Gerät (z. B. das erste Gerät D1) zu konvertieren. Insbesondere alte Geräte (sog. Legacy-Geräte) sind nicht in der Lage die Kommunikationsdaten eines verteilten Datenbanksystems bzw. einer Blockkette zu verarbeiten. Entsprechend wird anhand des zugeordneten Gerätes überprüft, welche Daten des Nachrichteninhalts überhaupt von dem Gerät verarbeitet werden können und es wird auch anhand des zugeordneten Gerätes überprüft wie diese Daten für ein entsprechendes Gerät konvertiert werden können. Beispielsweise kann im Falle der oben genannten technischen Aufgabe (ansteuern des Reservekraftwerkes), die in der Nachricht gespeichert ist, in konkrete Steuerbefehle für die Geräte bzw. Generatoren konvertiert werden. Die Steuerbefehle werden entsprechend den Anforderungen der Aufgabe ermittelt. Beispielsweise werden die ersten beiden Geräte bzw. Gasturbinen mit voller Leistung genutzt bzw. gefahren und die dritte Gasturbine nur mit halber Leistung um die geforderten 500 MW Leistung zu erbringen. Dabei ist das Datenformat z. B. ein proprietäres Datenformat der Geräte.

Die zweite Kommunikationsschnittstelle 240 ist dazu eingerichtet den konvertieren Nachrichteninhalt an das Gerät zu übertragen, das der entsprechenden ersten Nachricht zugeordnet ist. Entsprechend ist die zweite Kommunikationsschnittstelle 240 mit dem zweiten Bus BE2 verbunden und steht über diesen mit der zweiten Kommunikationsschnittstelle NI2 des Systems SYS kommunikativ in Verbindung. Der entsprechende Nachrichteninhalt, der an das entsprechende Gerät bzw. die entsprechenden Geräte übertragen wird, kann z. B. in Form einer zweiten Nachricht NE an die Geräte/das Gerät übertragen werden.

In einer Variante ist das Konvertierungsmodul 230 insbesondere ein optionales Modul. Dies ist beispielsweise der Fall, wenn der Nachrichteninhalt der entsprechenden ersten Nachricht nicht konvertiert werden muss bzw. der Nachrichteninhalt bzw. die entsprechende erste Nachricht ein Datenformat aufweist, das von den Geräten verarbeitet werden kann. In einem solchen Fall entspricht der konvertierte Nachrichteninhalt beim Übertragen an das Gerät bzw. die Geräte dem (unkonvertierten) Nachrichteninhalt der entsprechenden ersten Nachricht. Folglich wird beispielsweise die entsprechende erste Nachricht als zweite Nachricht an das Gerät oder die entsprechenden Geräte gesendet. Folglich entspricht insbesondere für andere Ausführungsformen ggf. der Empfangsvorrichtung der Nachrichteninhalt der entsprechenden ersten Nachricht dem konvertierten Nachrichteninhalt.

In dieser Variante kann die Empfangsvorrichtung folgende Merkmale umfassen:
- beispielsweise eine erste Kommunikationsschnittstelle, wobei
   - beispielsweise die erste Netzwerkschnittstelle dazu eingerichtet ist mit einem verteilten Datenbanksystem kommunizieren,
   - beispielsweise die erste Kommunikationsschnittstelle dazu eingerichtet ist erste Nachrichten von dem verteilten Datenbanksystem zu empfangen;
- beispielsweise ein Identifikationsmodul, wobei
   - beispielsweise das Identifikationsmodul dazu eingerichtet ist anhand des jeweiligen Nachrichteninhalts der ersten Nachrichten eine Zuordnung berechnet, für welche Geräte eine entsprechende erste Nachricht bestimmt ist;
- beispielsweise eine zweite Kommunikationsschnittstelle, wobei
   - beispielsweise die zweite Kommunikationsschnittstelle dazu eingerichtet ist den konvertieren Nachrichteninhalt und/oder den Nachrichteninhalt der entsprechenden ersten Nachricht (und/oder die erste Nachricht selbst) an das Gerät zu übertragen, das der entsprechenden ersten Nachricht zugeordnet ist.

In einer Variante ruft die Empfangsvorrichtung einen Gerätezustand von dem einer entsprechenden ersten Nachricht TE zugeordneten Gerät (z. B. Gerät D1) ab. Eine Übertragung an das zugeordnete Gerät ist dabei abhängig von dem abgerufenen Gerätezustand.

Auch können beispielsweise mit dem Gerätezustand ein Datensatz über die verfügbaren Geräteressourcen und/oder aktuellen Geräteeigenschaften mit abgerufen werden.

Insbesondere bei älteren Geräten ist es sinnvoll eine Überprüfung durchzuführen, ob die Geräte überhaupt in der Lage sind die entsprechenden Nachrichten zu verarbeiten.

Hat beispielsweise die zweite Turbine (zweites Gerät) aufgrund von Verschleiß oder eines technischen Defekts aktuell eine reduzierte Leistung kann dies beispielsweise beim Bestimmen der Geräte berücksichtigt werden und auch beim Konvertieren bzw. erstellen der Steuerbefehle zum Anfahren bzw. Ansteuern der Gasturbinen berücksichtigt werden. Entsprechend kann beispielsweise das erste und das dritte Gerät auf voller Leistung genutzt bzw. angefahren werden und das zweite Gerät wird entsprechend mit halber Leistung genutzt.

Mit anderen Worten erfolgt die Übertragung an das entsprechende Gerät bzw. Geräte, wenn vorgegebene Anforderungen der entsprechenden ersten Nachricht TE durch das zugeordnete Gerät erfüllt sind, indem beispielsweise die Erfüllung der vorgegenen Anforderungen anhand des Gerätezustandes überprüft wird. Die technische Aufgabe kann dabei beispielsweise durch die vorgegebenen Anforderungen festgelegt sein. Die vorgegebenen Anforderungen können dabei in einem entsprechenden Datensatz der entsprechenden ersten Nachricht TE gespeichert sein. Die vorgegenen Anforderungen können beispielsweise eine Anforderung zum Bereitstellen von 500 MW für 24 h an einem vorgegebenen Datum (z. B. 9. Juli 2018 um 14:43 Uhr) an einem vorgegebenen Ort oder Region (z. B. München oder Bayern oder Deutschland). Die vorgegenen Anforderungen können beispielsweise Fertigungsanweisungen oder Fertigungsvorgaben umfassen, um z. B. ein Getriebe oder Getriebeteile an einem vorgegebenen Datum (z. B. 9. Juli 2018 um 14:43 Uhr), an einem vorgegebenen Ort oder Region (z. B. München oder Bayern oder Deutschland), innerhalb eines vorgegebenen Zeitraums (startend am vorgegebenen Datum), mit einer vorgegenen Präzision (z. B. Abweichung von CAD-Daten um maximal 1 mm) zu fertigen. Entsprechend können die vorgegenen Anforderungen die genannten Beispiele oder eine Kombination der genannten Beispiele umfassen.

Die vorgegebenen Anforderungen können beispielsweise auch vorausgesetzte Steuerbefehle sein bzw. solche umfassen. Die vorgegebenen Anforderungen geben dabei z. B. vor, dass die vorausgesetzten Steuerbefehle beispielsweise von einem der Geräte bzw. dem entsprechenden Gerät bereits ausgeführt sein sollen, bevor die entsprechenden Nachrichten bzw. Nachrichteninhalt (z. B. der konvertierte Nachrichteninhalt) an die Geräte übermittelt werden. Alternativ oder zusätzlich können die vorausgesetzten Steuerbefehle auch weitere Geräte betreffen, wobei die weiteren Geräte beispielsweise Geräte eines weiteren Automatisierungsnetzwerkes sind. Beispielsweise wird gefordert, dass von dem weiteren Automatisierungsnetzwerk (z. B. ein Verteilungsnetzwerk für Treibstoff) zumindest eine vorgegebene Menge an Treibstoff für die Generatoren bereitgestellt wurde, bevor die entsprechenden Nachrichten mit Steuerbefehlen an die Geräte (z. B. Turbinen, Gasturbinen) übertragen werden. Um z. B. zu überprüfen, ob die vorausgesetzten Steuerbefehle bereits ausgeführt sind, können beispielsweise entsprechende Nachrichten bzw. Transaktionen im verteilten Datenbanksystem ausgelesen bzw. überprüft werden, die beispielsweise eine Ausführung der vorausgesetzten Steuerbefehle bestätigen. Diese entsprechenden Nachrichten bzw. Transaktionen können beispielsweise als Bestätigungstransaktionen bezeichnet werden und werden von den entsprechenden Geräten beispielsweise nach einer Ausführung der vorausgesetzen Steuerbefehle, z. B. mittels der Sendevorrichtung S, in dem verteilten Datenbanksystem gespeichert. Diese Bestätigungstransaktionen können beispielsweise Informationen über die Ausführung der vorausgesetzten Steuerbefehle umfassen (z. B. Ort, Zeitpunkt und Ausführungsdauer der vorausgesetzten Steuerbefehle), Geräteeigenschaften (z. B. welche Geräte haben die vorausgesetzten Steuerbefehle ausgeführt), Gerätezustände (z. B. war das Gerät in einem regulären Betriebszustand, war es in einem Wartungszustand).

Die vorausgeführten Steuerbefehle sind auch dahingehend vorteilhaft, wenn das Automatisierungsnetzwerk AN und die Geräte eine Fertigungsanlage sind (z. B. sind die Gerät Fertigungsmaschinen). Beispielsweise kann mit den vorausgesetzten Steuerbefehlen auch sichergestellt werden, dass ein zu fertigendes Werkstück sich in einem (Fertigungs-)Zustand befindet, damit die Steuerbefehle des zu übertragenden (konvertierten) Nachrichteninhalts korrekt für eine weitere Bearbeitung des Werkstücks ausgeführt werden können. Beispielsweise wird in den vorausgesetzten Steuerbefehlen vorgegeben, dass ein Werkstück von einer Drehbank (z. B. das erste Gerät D1) zunächst bearbeitet wird und für die weitere Bearbeitung an einer vorgegebenen Position bereitgestellt wird. Der (aktuelle, konvertierte) Nachrichteninhalt mit Steuerbefehlen, der übertragen werden soll, ist beispielsweiseweise für eine Poliermaschine ((z. B. das zweite Gerät D2) bestimmt (soll also an diese übertragen werden), die das entsprechende Werkstück an der vorgegebenen Position aufnimmt und poliert.

Die vorausgeführten Steuerbefehle sind auch dahingehend vorteilhaft, wenn das Automatisierungsnetzwerk AN und die Geräte beispielsweise vernetzte Geldautomaten oder Bankautomaten sind. Beispielsweise kann mit den vorausgesetzten Steuerbefehlen auch sichergestellt werden, dass eine Geldauszahlung durch einen Bankautomaten (z. B. durch das Gerät D1) dann erfolgt, wenn vorher eine Authentifizierung des Bankkunden erfolgreich durchgeführt wurde und eine Bestätigung dafür in entsprechenden Bestätigungstransaktionen des verteilten Datenbanksystems gespeichert wurde.

Beispielsweise wird in den vorausgesetzten Steuerbefehlen (also den vorgegeben Anforderungen) vorgegeben, dass z. B. eine Nutzerauthentisierung bzw. Nutzerauthentifizierung mittels eines vorgegebenen Authentifizierungsverfahrens (z. B. Zwei-Faktor-Authentifizierung, Pin-Eingabe) erfolgreich erfolgt sein muss, bevor z. B. die Auszahlung des Geldes erlaubt bzw. durchführt wird. Die Empfangsvorrichtung E (z. B. mittels der zweiten Kommunikationsschnittstelle 240) überträgt erst dann den entsprechenden (konvertierten) Nachrichteninhalt (der entsprechenden ersten Nachricht) mit Steuerbefehlen an das Gerät (z. B. den Geldautomat), wenn z. B. in dem verteilten Datenbanksystem eine Bestätigungstransaktion vorliegt, die beispielsweise eine erfolgreiche Nutzerauthentisierung bzw. Nutzerauthentifizierung bestätigt. Mit den Steuerbefehlen wird dann beispielsweise der Geldzähler konfiguriert, dass die von dem Nutzer bzw. Bankkunden angeforderte Geldmenge bereitgestellt wird und anschließend die Klappe zu Geldentnahme geöffnet wird.

Insbesondere ist in diesen Varianten auch die Sendevorrichtung S dahingehend ausgebildet, die entsprechenden Nachrichten bzw. Bestätigungstransaktionen ggf. für die vorausgesetzten Steuerbefehle an das verteilte Datenbanksystem zu übermitteln bzw. im verteilten Datenbanksystem zu speichern, wenn die Geräte die entsprechenden vorausgesetzten Steuerbefehle bzw. Steuerbefehl erfolgreich ausgeführt haben. War die Ausführung beispielsweise nicht erfolgreich, so kann auch dies in Bestätigungstransaktionen bzw. entsprechenden Nachrichten im verteilten Datenbanksystem gespeichert werden.

Die Sendevorrichtung S umfasst eine erste Kommunikationsschnittstelle 310 (z. B. eine Netzwerkschnittstelle zu einem Ethernetnetzwerk), ein Identifikationsmodul 320, ein Konvertierungsmodul 330 und eine zweite Kommunikationsschnittstelle (z. B. eine Netzwerkschnittstelle zu einem Ethernetnetzwerk) 340, die über einen Bus 301 miteinander kommunikativ verbunden sind.

Die erste Kommunikationsschnittstelle 310 ist dazu eingerichtet mit den Geräten zu kommunizieren. Die erste Kommunikationsschnittstelle 310 ist mit dem dritten Bus BS1 verbunden und steht damit mit der zweiten Kommunikationsschnittstelle NI2 des Systems SYS kommunikativ in Verbindung. Zudem ist die erste Kommunikationsschnittstelle dazu eingerichtet erste Nachrichten von den Geräten zu empfangen. Dabei sind die ersten Nachrichten z. B. in einem proprietären Datenformat der Geräte gespeichert.

Das Identifikationsmodul 320 ist dazu eingerichtet anhand des jeweiligen Nachrichteninhalts der ersten Nachrichten eine Zuordnung zu berechnen, welches Gerät eine entsprechende erste Nachricht NS gesendet hat.

Beispielsweise kann ein entsprechender Nachrichteninhalt eine digitale Signatur, ein digitales Zertifikat, eine Geräteadresse (z. B. eine Netzwerkadresse), ein Gerätestatus (z. B. einen Gerätezustand) oder einen eindeutigen Identifizierer (z. B. eine UID) umfassen, anhand dessen das entsprechende Gerät oder die Geräte bestimmt werden können. Beispielsweise kann die Nachricht bzw. der Nachrichteninhalt einen Gerätestatus umfassen, zu welchem Grad die technische Aufgabe durch die Geräte bzw. das Automatisierungsnetzwerk erfüllt wurde.

Zurückkommend auf das oben genannte Beispiel mit den Gasturbinen: Es könnte z. B. sein, dass die Geräte in Summe nicht die geforderte Leistung erbringen. Beispielsweise kann die erbrachte Leistung in Summe nur 300 MW betragen. Auch können jeweils einzelne Nachrichten durch die Geräte verschickt worden sein, z. B. zu welchem Grad bzw. in welchem Umfang sie jeweils die technische Aufgabe erfüllt haben (z. B. erstes Gerät 50 MW, zweites Gerät 100 MW, drittes Gerät 150 MW erbrachte Leistung). Die Sendevorrichtung S oder ein weiteres Gerät (z. B. das die Nachricht an die Sendevorrichtung S gesendet hat) des Automatisierungsnetzwerkes AN berechnen dann, inwieweit die technische Aufgabe erfüllt ist. Der fehlende Teil der Leistung kann beispielsweise wieder als Nachricht über das verteilte Datenbanksystem an ein weiteres Automatisierungsnetzwerk eines Kohlekraftwerkes oder eines Windkraftwerkanlage als zweite Nachricht TS gesendet werden. Diese können dann beispielsweise den Leistungsfehlbetrag bei der Energieerzeugung erbringen. Die zweite Nachricht TS wird dann beispielsweise in Transaktionen (z. B. die zwölfte Transaktion T3d) des verteilten Datenbanksystems gespeichert oder die zweite Nachricht (z. B. die zwölfte Transaktion T3d) ist bereits eine in dem verteilten Datenbanksystem gespeicherte Transaktion, nachdem diese erfolgreich versendet bzw. übertragen wurde.

Das Konvertierungsmodul 330 ist dazu eingerichtet den Nachrichteninhalt der entsprechenden ersten Nachricht NS in ein Datenformat für das verteilte Datenbanksystem zu konvertieren. Beispielsweise kann der Nachrichteninhalt der entsprechenden ersten Nachricht in ein allgemeingültiges Datenformat (z. B. XML bzw. entsprechend eines XML-Schemas) konvertiert werden, das kompatibel mit dem verteilten Datenbanksystem ist bzw. ein Datenformat ist, welches das verteilte Datenbanksystem verarbeiten kann.

In einer Variante ist das Konvertierungsmodul 330 insbesondere ein optionales Modul. Dies ist beispielsweise der Fall, wenn der Nachrichteninhalt der entsprechenden ersten Nachricht nicht konvertiert werden muss bzw. der Nachrichteninhalt bzw. die entsprechende erste Nachricht ein Datenformat aufweist, das von dem verteilten Datenbanksystem verarbeitet werden kann. In einem solchen Fall entspricht der konvertierte Nachrichteninhalt beim Übertragen an das verteilte Datenbanksystem dem (unkonvertierten) Nachrichteninhalt der entsprechenden ersten Nachricht. Folglich wird beispielsweise die entsprechende erste Nachricht als zweite Nachricht an das verteilte Datenbanksystem gesendet. Folglich entspricht insbesondere für entsprechende Ausführungsformen der Sendevorrichtung ggf. der Nachrichteninhalt der entsprechenden ersten Nachricht dem konvertierten Nachrichteninhalt.

In dieser Variante kann die Sendevorrichtung folgende Merkmale umfassen:
- beispielsweise eine erste Kommunikationsschnittstelle, wobei
   - beispielsweise die erste Kommunikationsschnittstelle dazu eingerichtet ist mit Geräten zu kommunizieren,
   - beispielsweise die Kommunikationsschnittstelle dazu eingerichtet ist erste Nachrichten von den Geräten zu empfangen;
- beispielsweise ein Identifikationsmodul, wobei
   - beispielsweise das Identifikationsmodul dazu eingerichtet ist anhand des jeweiligen Nachrichteninhalts der ersten Nachrichten eine Zuordnung berechnet, welches Gerät eine entsprechende erste Nachricht gesendet hat;
- beispielsweise eine zweite Kommunikationsschnittstelle, wobei
   - beispielsweise die zweite Kommunikationsschnittstelle dazu eingerichtet ist mit einem verteilten Datenbanksystem kommunizieren,
   - beispielsweise die Kommunikationsschnittstelle dazu eingerichtet ist den konvertierten Nachrichteninhalt und/oder den Nachrichteninhalt der entsprechenden ersten Nachricht (und/oder die erste Nachricht selbst) an das verteilte Datenbanksystem zu übertragen.

Die zweite Kommunikationsschnittstelle 340 ist dazu eingerichtet den konvertieren Nachrichteninhalt an das verteilte Datenbanksystem zu übertragen. Entsprechend ist die zweite Kommunikationsschnittstelle 340 mit dem vierten Bus BS2 verbunden und steht über diesen mit der zweiten Kommunikationsschnittstelle NI2 des Systems SYS kommunikativ in Verbindung. Der entsprechende Nachrichteninhalt, der an das verteilte Datenbanksystem übertragen wird, kann z. B. in Form einer zweiten Nachricht TE an die Geräte/das Gerät übertragen werden. Die zweite Nachricht TE kann hierbei beispielsweise eine Transaktion des verteilten Datenbanksystems sein, wobei die zweite Nachricht den konvertierten Nachrichteninhalt umfasst/speichert.

Die Sendevorrichtung S und die Empfangsvorrichtung E können in unterschiedlichen Varianten jeweils ein eigenständiges Kryptographiemodul umfassen. Dies ist vorteilhaft, um die Sicherheit zu erhöhen, da sollte z. B. ein unbefugter Zugriff auf die kryptographische Daten eines der Kryptographiemodul erhalten haben, dieser Unbefugte nicht automatisch Zugriff auf die anderen kryptographische Daten des anderen Kryptographiemoduls erhält. Alternativ können die Sendevorrichtung S und die Empfangsvorrichtung E ein gemeinsames Kryptographiemodul nutzen. Dies ist vorteilhaft um die Herstellungskosten für die einzelnen Module gering zu halten. Im Falle eines gemeinsamen Kryptographiemoduls können die entsprechenden kryptographischen Daten von der Sendevorrichtung S und/oder die Empfangsvorrichtung E gemeinsam genutzt werden. Das Kryptographiemodul ist vorzugsweise durch ein einem Manipulationsschutzmodul (z. B. durch Tamper-Mechanismen/Manipulationsschutz-Mechanismen) vor einem Zugriff von Unbefugten geschützt. Beispielsweise kann das Kryptographiemodul eine mechanische und/oder eine elektrische und/oder elektronische und/oder elektromechanische Schutzvorrichtung umfassen. Dies kann beispielsweise dadurch realisiert werden, dass das Kryptographiemodul die kryptographische Daten für die Geräte in einem geschützten Speichermodul bzw. Speicher (z. B. ein Schlüsselspeicher) speichert, auf dessen Daten (nur) das Kryptographiemodul zugreifen kann. Entsprechend sind dieser Speicher und/oder das Kryptographiemodul durch ein Stahlgehäuse geschützt (mechanische Schutzvorrichtung), das z. B. einen Zugriff von Unbefugten unterbindet. Alternativ oder zusätzlich kann das Kryptographiemodul oder der Speicher durch eine Bohrschutzfolie geschützt sein. Sobald jemand versucht auf unberechtigte Weise oder über eine unerlaubte Schnittstelle auf den Speicher zuzugreifen, werden z. B. die kryptographische Daten gelöscht.

Das Kryptographiemodul umfasst beispielsweise kryptographische Daten spezifisch für die Geräte (gerätespezifische kryptographische Daten).

Bei den kryptographische Daten kann es sich beispielsweise um einen oder mehrere kryptographische Schlüssel handeln, die spezifisch für ein jeweiliges Gerät berechnet wurden. Bei den kryptographischen Schlüsseln kann es sich z. B. um symmetrische kryptographische Schlüssel handeln oder um asymmetrische kryptographische Schlüssel handeln (z. B. ein Public/Private Schlüsselpaar).

Diese kryptographische Daten können beispielsweise dauerhaft im bzw. durch das Kryptographiemodul gespeichert werden.

Alternativ können die kryptographische Daten nach einer vorgegebenen Zeit (z. B. wenn ein entsprechendes Gerät für einige Stunden keine Daten/Nachrichten kommuniziert hat) aus dem Kryptographiemodul gelöscht werden. Kommuniziert das entsprechende Gerät später wieder, kann der notwendige kryptographische Schlüssel wieder neu berechnet werden. Entsprechend können die kryptographischen Daten für ein jeweiliges Gerät reproduzierbar berechnet werden bzw. erneut berechnet werden. Hierzu können beispielsweise eindeutige gerätespezifische Daten des entsprechenden Gerätes genutzt werden. Eindeutige gerätespezifische Daten sind beispielsweise eine UID des Gerätes, ein eindeutiger Identifizierer, der anhand von für das Gerät charakteristischen Sensordaten berechnet wurde - z. B. eine berechnete Charakteristik für ein Rauschsignal, das durch einen Sensor des Gerätes ermittelt wurde. Diese eindeutigen gerätespezifischen Daten können beispielsweise in Kombination mit einem geheimen Startwert (z. B. eine Seed), der beispielsweise durch das Kryptographiemodul sicher gespeichert bzw. verwaltet, genutzt werden, um die entsprechenden kryptographischen Daten erneut zu berechnen. Beispielsweise kann ein erster geheimer Startwert genutzt werden, um die kryptographischen Daten für die Sendevorrichtung zu berechnen und ein zweiter geheimer Startwert kann dazu verwendet werden die kryptographischen Daten für die Empfangsvorrichtung zu berechnen. Die genannten Berechnungen erfolgen vorzugsweise durch das Kryptographiemodul, sodass z. B. auch die verwendeten Algorithmen und temporär berechnete Daten vor dem Zugriff Unbefugter geschützt sind.

Das Kryptographiemodul kann dann beispielsweise anhand des zugeordneten Gerätes die entsprechenden kryptographischen Daten laden, diese berechnen oder auf diese zugreifen.

Das Laden der kryptographische Daten kann beispielsweise auch dadurch erfolgen, dass mittels der gerätespezifischen Daten und/oder mit vorrichtungsspezifischen Daten (z. B. sendevorrichtungsspezifischen Daten und/oder empfangsvorrichtungsspezifischen Daten) zunächst ein weitere kryptographischer Schlüssel gebildet wird, um beispielsweise auf die gerätespezifischen kryptographischen Daten eines entsprechenden Gerätes zugreifen zu können. Die (gerätespezifischen) kryptographischen Daten sind dabei - wie bereits erwähnt - vorzugsweise durch das bzw. im Kryptographiemodul gespeichert. Beispielsweise wird eine UID eines entsprechenden Gerätes mit einem geheimen Startwert der Sendevorrichtung S und/oder der Empfangsvorrichtung E und/oder des Systems SYS kombiniert, um den weiteren kryptographischen Schlüssel zu bilden, um beispielsweise die kryptographischen Daten zu entschlüsseln. Zum Bilden des Weiteren kryptographischen Schlüssels können z. B. die Daten zu einer kombinierten Zeichenkette zusammengefügt werden (UID + geheimer Startwert). Alternativ oder zusätzlich dient die kombinierte Zeichenkette oder ein Teil der kombinierten Zeichenkette als Eingabeparameter für eine Schlüsselableitungsfunktion, wobei ein entsprechender Schlüssel reproduzierbar abgeleitet werden kann, sofern z. B. die inhaltlich gleiche/identische Zeichenkette als Eingabeparameter verwendet wird.

Im Falle der Sendevorrichtung S kann beispielsweise mittels der entsprechenden kryptographischen Daten zumindest ein Teil des Nachrichteninhalts der entsprechenden ersten Nachricht gerätespezifischen für das zugeordnete Gerät kryptographisch geschützt werden (also z. B. ein gerätespezifischer kryptographischer Schutz erzeugt werden). Dieses kryptographische Schützen erfolgt beispielsweise vor dem Senden des Nachrichteninhalts. Im Falle einer Empfangsvorrichtung E wird anhand der kryptographischen Daten zumindest einen Teil des Nachrichteninhalts der entsprechenden ersten Nachricht für ein zugeordnetes Gerät überprüft und/oder entschlüsselt. Dabei ist beispielsweise unter einem gerätespezifischen kryptographischen Schutz zu verstehen, dass z. B. die Nachrichten (bzw. deren Nachrichteninhalt), die von einem entsprechenden Gerät stammen, mittels der gerätespezifischen kryptographischen Daten geschützt werden, um vorzugsweise eine Authentizität der entsprechenden Nachrichten bzw. des Nachrichteninhalts überprüfbar zu machen.

Bei der Sendevorrichtung S ist dies dahingehend vorteilhaft, um insbesondere die Nachrichten die an das verteilte Datenbanksystem gesendet werden (und/oder von diesem gespeichert werden) kryptographisch zu schützen (oder Nachrichten die von den Geräten geschickt wurden kryptographisch zu überprüfen z. B. analog zu Empfangsvorrichtung). Dies kann beispielsweise dadurch erfolgen, dass der entsprechende Nachrichteninhalt mittels einer (kryptographischen) Prüfsumme geschützt wird und/oder verschlüsselt wird. Hierzu kann die Sendevorrichtung S beispielsweise einen ersten kryptographischen Schlüssel (dieser ist z. B. spezifisch für das Gerät) umfassen, mit dem beispielsweise eine Prüfsumme über die Nachrichten bzw. den Nachrichteninhalt gebildet wird. Alternativ kann mit diesem ersten kryptographischen Schlüssel beispielsweise auch der Nachrichteninhalt verschlüsselt werden. Ein Empfänger der Nachricht kann beispielsweise mit dem ersten kryptographischen Schlüssel (im Falle eines symmetrischen kryptographischen Verfahrens) oder einem zweiten kryptographischen Schlüssel, der dem ersten kryptographischen Schlüssel zugeordnet ist (z. B. bei einem asymmetrischen kryptographischen Verfahren bei dem z. B. der erste Schlüssel ein privater Schlüssel ist und der zweite Schlüssel ein öffentlicher Schlüssel ist), die Entschlüsselung oder Überprüfung des entsprechenden Nachrichteninhalts durchführen. Hierzu kann das entsprechende Schlüsselmaterial dem Empfänger beispielsweise über einen sicheren Kanal übermittelt worden sein.

Die kryptographischen Daten (z. B. die kryptographischen Schlüssel), für z. B. die Sendevorrichtung S, können beispielsweise anhand von gerätespezifischen Daten oder eindeutig gerätespezifischen Daten eines entsprechenden Gerätes erzeugt worden sein (z. B. eine UID des Gerätes, einer Zufallszahl, die durch das entsprechende Gerät erzeugt wurde, oder anhand von für das Gerät charakteristischen Sensordaten berechnet wurde - z. B. eine berechnete Charakteristik für ein Rauschsignal, das durch einen Sensor des Gerätes ermittelt wurde). Alternativ oder zusätzlich sind die kryptographischen Daten eine Kombination aus (eindeutigen) gerätespezifischen Daten und sendevorrichtungsspezifischer Daten (z. B. eine UID der Sendevorrichtung, einer Zufallszahl, die durch die Sendevorrichtung erzeugt wurde, oder anhand von für die Sendevorrichtung Sensordaten berechnet wurde - z. B. eine berechnete Charakteristik für ein Rauschsignal, das durch einen Sensor der Sendevorrichtung ermittelt wurde).

Die Sensordaten können dabei beispielsweise von einem Sensor erfasst werden, der z. B. das thermische Rauschen eines Schaltkreises des Gerätes erfasst oder das Rauschen des Sensors selbst verwendet werden. Es kann beispielsweise auch das Rauschen an einer ungenutzten Datenschnittstelle oder auch an einer genutzten Datenschnittstelle verwendet werden. Dies kann beispielsweise (z. B. für die Geräte oder für das System SYS) eine Tokenring-Netzwerkschnittstelle eines Gerätes sein oder eine RS232 Schnittstelle. Auch kann z. B. das Rauschen einer Datenakquisitionshardware verwenden werden.

Beispielsweise ist es für die Sendevorrichtung S auch möglich, dass mittels der gerätespezifischen Daten und/oder sendevorrichtungsspezifischer Daten (z. B. der geheime Startwert) für das entsprechende Gerät die kryptographischen Daten reproduzierbar ermittelt werden oder mittels dieser Daten ein kryptographischer Schutz (z. B. eine Verschlüsselung), mit dem die entsprechenden kryptographischen Daten eines Gerätes geschützt sind, aufgehoben (z. B. entschlüsselt werden) und/oder überprüft werden (z. B. eine digitale Signatur überprüft wird). Die gerätespezifischen Daten können beispielsweise in der Nachricht des entsprechenden Gerätes gespeichert sein. Bei den gerätespezifischen Daten und/oder sendevorrichtungsspezifischen Daten handelt es sich vorzugsweise um Daten die nur schwer gefälscht werden können, z. B. eine Charakteristik eines Rauschsignals (z. B. von einem Sensor oder einem Manipulationsschutzmodul erfasst wird). Bei einer Manipulation des Gerätes oder der Vorrichtung (z. B. Sendevorrichtung oder Empfangsvorrichtung) würde diese gerätespezifischen Daten und/oder (sende)vorrichtungsspezifischen Daten derart verändert werden, dass sich z. B. die Charakteristik derart verändert, dass die kryptographischen Daten ungültig werden oder auf diese nicht mehr zugegriffen werden kann.

Es können z. B. auch mittels eines Challenge-Response-Verfahren kryptographische Daten oder Schlüsselmaterial oder gerätespezifischen Daten oder eindeutig gerätespezifischen Daten eines entsprechenden Gerätes ausgetauscht werden. Dies kann beispielsweise dadurch erfolgen indem das Verfahren auf Geräteseite und auf Sendevorrichtungsseite mit entsprechenden Initialwerten konfiguriert wird (z. B. indem in einem geschützten Speicher des Gerätes bzw. der Sendevorrichtung entsprechende Initialwerte vorkonfiguriert sind bzw. diese Initialwerte durch den geschützten Speicher berechnet und/oder bereitgestellt werden) und/oder entsprechende gerätespezifischen Daten (z. B. ein kryptographischer Schlüssel oder ein Teil eines kryptographischen Schlüssels) von der Sendevorrichtung abgerufen werden können.

Die Empfangsvorrichtung E ist mit einem Kryptographiemodul dahingehend vorteilhaft, um insbesondere die Nachrichten die an ein entsprechendes Gerät übermittelt werden sollen kryptographisch zu überprüfen (oder z. B. analog zur Sendevorrichtung auch kryptographisch zu schützen). Hierzu kann der Nachrichtenerstelle beispielsweise einen ersten kryptographischen Schlüssel erhalten haben, mit dem beispielsweise eine Prüfsumme über die Nachrichten bzw. den Nachrichteninhalt gebildet wurde, die von der Empfangsvorrichtung E empfangen wurde. Alternativ kann mit diesem ersten kryptographischen Schlüssel beispielsweise auch der Nachrichteninhalt verschlüsselt worden sein. Beispielsweise kann mit dem ersten kryptographischen Schlüssel (im Falle eines symmetrischen kryptographischen Verfahrens) oder einem zweiten kryptographischen Schlüssel, der dem ersten kryptographischen Schlüssel zugeordnet ist (z. B. bei einem asymmetrischen kryptographischen Verfahren bei dem z. B. der erste Schlüssel ein privater Schlüssel ist und der zweite Schlüssel ein öffentlicher Schlüssel ist), die Entschlüsselung oder Überprüfung des entsprechenden Nachrichteninhalts erfolgen.

Die kryptographischen Daten (z. B. die kryptographischen Schlüssel) der Empfangsvorrichtung E können beispielsweise anhand von gerätespezifischen Daten oder eindeutigen gerätespezifischen Daten eines entsprechenden Gerätes erzeugt worden sein (z. B. eine UID des Gerätes, einer Zufallszahl, die durch das entsprechende Gerät erzeugt wurde, oder anhand von für das Gerät charakteristischen Sensordaten berechnet wurde - z. B. eine berechnete Charakteristik für ein Rauschsignal, das durch einen Sensor des Gerätes ermittelt wurde).

Die Sensordaten können für die Empfangsvorrichtung E und/oder das System SYS beispielsweise von einem Sensor erfasst werden, der z. B. das thermische Rauschen eines Schaltkreises des Gerätes erfasst oder das Rauschen des Sensors selbst verwendet werden. Es kann beispielsweise auch das Rauschen an einer ungenutzten Datenschnittstelle oder auch an einer genutzten Datenschnittstelle verwendet werden. Dies kann beispielsweise eine Tokenring-Netzwerkschnittstelle eines Gerätes sein oder eine RS232 Schnittstelle. Auch kann z. B. das Rauschen einer Datenakquisitionshardware verwenden werden.

Alternativ oder zusätzlich sind die kryptographischen Daten für eine Empfangsvorrichtung E eine Kombination aus gerätespezifischen Daten und empfangsvorrichtungsspezifischer Daten (z. B. eine UID der Empfangsvorrichtung, einer Zufallszahl, die durch die Empfangsvorrichtung erzeugt wurde, oder anhand von für die Empfangsvorrichtung Sensordaten berechnet wurde - z. B. eine berechnete Charakteristik für ein Rauschsignal, das durch einen Sensor der Empfangsvorrichtung ermittelt wurde). Beispielsweise ist es auch möglich, dass mittels der gerätespezifischen Daten und/oder empfangsvorrichtungsspezifischer Daten für das entsprechende Gerät die kryptographischen Daten reproduzierbar ermittelt werden. Beispielsweise kann mittels dieser gerätespezifischen Daten und/oder empfangsvorrichtungsspezifischer Daten ein kryptographischer Schutz (z. B. eine Verschlüsselung), mit dem die entsprechenden kryptographischen Daten eines Gerätes geschützt sind, aufgehoben (z. B. entschlüsselt werden) und/oder überprüft werden (z. B. eine digitale Signatur überprüft wird). Hierzu kann ggf. anhand dieser Daten ein kryptographischer Schlüssel berechnet werden, um die dafür notwendigen kryptographischen Operationen durchzuführen.

Die gerätespezifischen Daten der Geräte für die Empfangsvorrichtung E können beispielsweis beim Abrufen des Gerätezustandes für ein Gerät mit abgerufen werden. Bei den gerätespezifischen Daten und/oder empfangsvorrichtungsspezifischer Daten handelt es sich vorzugsweise um Daten die nur schwer gefälscht werden können, z. B. ein geheimer Startwert oder eine Charakteristik eines Rauschsignals (z. B. von einem Sensor oder einem Manipulationsschutzmodul erfasst wird), das bei einer Manipulation des Gerätes derart verändert wird, dass sich z. B. die Charakteristik derart verändert, sodass wiederum die kryptographischen Daten ungültig werden oder auf diese nicht mehr zugegriffen werden kann.

Wurde beispielsweise ein Gerät durch ein manipuliertes anderes Gerät von einem Unbefugten ausgetauscht, ist es beispielsweise sehr schwer die Charakteristik eines Rauschsignals des ursprünglichen Gerätes durch das manipulierte Gerät zu duplizieren oder zu fälschen. Es wird nun beispielsweise die Charakteristik des Rauschsignals (des manipulierten Gerätes) verwendet, um einen kryptographischen Schlüssel zu erzeugen. Mittels des kryptographischen Schlüssels wird nun versucht z. B. die kryptographischen Daten zu entschlüsselt. Da anhand der veränderten Charakteristik des Rauschsignals nicht der korrekte Schlüssel zum Entschlüsseln gebildet werden könnte, ist folglich z. B. das Entschlüsseln der kryptographischen Daten erfolglos.

Es können z. B. auch mittels eines Challenge-Response-Verfahren gerätespezifischen Daten oder eindeutigen gerätespezifischen Daten ermittelt bzw. ausgetauscht werden (z. B. beim Abrufen eines Gerätezustandes), indem beispielsweise das Verfahren auf Geräteseite und auf Empfangsvorrichtungsseite mit entsprechenden Initialwerten konfiguriert wird (z. B. indem in einem geschützten Speicher des Gerätes bzw. der Empfangsvorrichtung entsprechende Initialwerte vorkonfiguriert sind bzw. diese Initialwerte durch den geschützten Speicher berechnet und/oder bereitgestellt werden) und entsprechende gerätespezifischen Daten (z. B. ein kryptographischer Schlüssel oder ein Teil eines kryptographischen Schlüssels) von der Empfangsvorrichtung abgerufen werden können.

Auch können die Sendevorrichtung S und/oder die Empfangsvorrichtung E jeweils ein Initialisierungsmodul umfassen oder ein gemeinsames Initialisierungsmodul nutzen. Dieses Initialisierungsmodul ist dazu eingerichtet, dass z. B. bei einem neuen Gerät die entsprechenden kryptographischen Daten berechnet werden, wenn für dieses Gerät erstmalig Daten Empfangen werden oder an dieses gesendet werden sollen. Dies kann z. B. anhand der genannten Verfahren generiert werden (Eindeutige gerätespezifische Daten + Seed).

In einer Variante können die Sendevorrichtung S und/oder die Empfangsvorrichtung E auch virtuelle Geräte bilden, die die entsprechenden Schnittstellen und technischen Merkmale aufweisen, um mit dem verteilten Datenbanksystem zu kommunizieren. Beispielsweise können entsprechende virtuelle Geräte mit einer vorgegebenen Konfiguration instanziiert werden, wobei die Konfiguration abhängig von entsprechenden Geräteinformationen über das physische Geräte bestimmt oder berechnet wird. Dabei ist beispielsweise unter Konfiguration zu verstehen, welche Schnittstellen und Funktionen ein entsprechendes virtuelles Gerät bereitstellen soll.

Dies kann beispielsweise mittels einer Virtualisierungsumgebung wie z. B. VM-Ware erfolgen. Kommuniziert nun ein Knoten des verteilten Datenbanksystems mit einem virtuellen Gerät, so leitet die Sendevorrichtung S und/oder die Empfangsvorrichtung E die entsprechenden Informationen an das Alt-Gerät bzw. Legacy-Gerät weiter, wobei vor der Weiterleitung die entsprechende Konvertierung und Verarbeitung erfolgt, so wie dies oben schrieben ist. Dies ist insbesondere für Fertigungsmaschinen vorteilhaft, wenn diese zwar z. B. nicht blockkettenfähig sind, aber durch ein blockkettenbasiertes Steuersystem gesteuert werden sollen. Beispielsweise kann das Identifikationsmodul die entsprechenden virtuellen Geräte hierfür nutzen oder das Identifikationsmodul ist ein Bauteil/Element, das von einem oder mehreren virtuelle Geräten realisiert ist. Vorzugsweise verhalten sich die virtuellen Geräte wie ein Knoten des verteilten Datenbanksystems und emuliert bzw. ergänzt Funktionen für die physischen Geräte, die diesen für eine Kommunikation bzw. einem Zusammenarbeiten mit den Knoten des verteilten Datenbanksystems fehlen.

Ein entsprechendes Identifikationsmodul (mit virtuellen Geräten) für eine Empfangsvorrichtung E kann beispielsweise wie folgt realisiert sein. Das Identifikationsmodul ist dabei dazu eingerichtet anhand des jeweiligen Nachrichteninhalts der ersten Nachrichten eine Zuordnung zu berechnen, für welches virtuelle Geräte eine entsprechende erste Nachricht bestimmt ist. Die virtuellen Geräte umfassen dabei z. B. das Konvertierungsmodul und/oder die zweite Kommunikationsschnittstelle bzw. umfassen jeweils eine eigene virtuelle Variante von diesen bzw. greifen auf das Konvertierungsmodul und/oder die zweite Kommunikationsschnittstelle zu, um die Nachrichten bzw. den Nachrichteninhalt an das dem entsprechenden virtuellen Gerät zugeordnete physische Gerät zu übertragen.

Eine Empfangsvorrichtung mit entsprechenden virtuellen Geräten kann beispielsweise folgende Merkmale aufweisen:
- beispielsweise eine erste Kommunikationsschnittstelle, wobei
   - beispielsweise die erste Netzwerkschnittstelle dazu eingerichtet ist mit einem verteilten Datenbanksystem kommunizieren,
   - beispielsweise die erste Kommunikationsschnittstelle dazu eingerichtet ist erste Nachrichten von dem verteilten Datenbanksystem zu empfangen;
- beispielsweise virtuelle Geräte, wobei
   - beispielsweise den virtuellen Geräten jeweils ein entsprechendes (physisches) Gerät (z. B. des Automatisierungsnetzwerkes AN) zugeordnet ist,
   - beispielsweise anhand des jeweiligen Nachrichteninhalts (z. B. Zieladresse der entsprechenden Nachricht) der ersten Nachrichten eine Zuordnung berechnet wird, für welches der virtuellen Geräte eine entsprechende erste Nachricht bestimmt ist;
- beispielsweise ein Konvertierungsmodul, wobei
   - beispielsweise das Konvertierungsmodul dazu eingerichtet ist den Nachrichteninhalt der entsprechenden ersten Nachricht in ein Datenformat für das zugeordnete Gerät zu konvertieren;
- beispielsweise eine zweite Kommunikationsschnittstelle, wobei
   - beispielsweise die zweite Kommunikationsschnittstelle dazu eingerichtet ist den konvertieren Nachrichteninhalt und/oder den Nachrichteninhalt der entsprechenden ersten Nachricht (und/oder die erste Nachricht selbst) an das Gerät zu übertragen, das der entsprechenden ersten Nachricht zugeordnet ist.

Ein entsprechendes Identifikationsmodul für eine Sendevorrichtung S kann beispielsweise wie folgt realisiert sein. Das Identifikationsmodul ist dabei dazu eingerichtet anhand des jeweiligen Nachrichteninhalts der ersten Nachrichten eine Zuordnung zu berechnen, von welchem physischen Gerät eine Nachricht empfangen wurde. Anhand dieser Zuordnung wird nun festgelegt welches virtuelle Gerät eine entsprechende Nachricht verarbeiten und/oder senden soll. Die virtuellen Geräte umfassen dabei das Konvertierungsmodul und/oder die zweite Kommunikationsschnittstelle bzw. umfassen jeweils eine eigene virtuelle Variante von diesen bzw. greifen auf das Konvertierungsmodul und/oder die zweite Kommunikationsschnittstelle zu, um die Nachrichten bzw. den Nachrichteninhalt mittels dem entsprechenden virtuellen Gerät an das verteilte Datenbanksystem zu übertragen.

Eine Sendevorrichtung S mit entsprechenden virtuellen Geräten kann beispielsweise folgende Merkmale aufweisen:
- beispielsweise eine erste Kommunikationsschnittstelle, wobei
   - beispielsweise die erste Kommunikationsschnittstelle dazu eingerichtet ist mit Geräten zu kommunizieren,
   - beispielsweise die Kommunikationsschnittstelle dazu eingerichtet ist erste Nachrichten von den Geräten zu empfangen;
- beispielsweise virtuelle Geräte, wobei
   - beispielsweise den virtuellen Geräten jeweils ein entsprechendes (physisches) Gerät (z. B. eines Automatisierungsnetzwerkes) zugeordnet ist,
   - beispielsweise anhand des jeweiligen Nachrichteninhalts (z. B. Netzwerkadresse des Senders) der ersten Nachrichten eine Zuordnung berechnet wird, welches Gerät eine entsprechende erste Nachricht gesendet hat;
- beispielsweise ein Konvertierungsmodul, wobei
   - beispielsweise das Konvertierungsmodul dazu eingerichtet ist den Nachrichteninhalt der entsprechenden ersten Nachricht in ein Datenformat für das verteilte Datenbanksystem zu konvertieren;
- beispielsweise eine zweite Kommunikationsschnittstelle, wobei
   - beispielsweise die zweite Kommunikationsschnittstelle dazu eingerichtet ist mit einem verteilten Datenbanksystem kommunizieren,
   - beispielsweise die Kommunikationsschnittstelle dazu eingerichtet ist den konvertierten Nachrichteninhalt und/oder den Nachrichteninhalt der entsprechenden ersten Nachricht (und/oder die erste Nachricht selbst) an das verteilte Datenbanksystem zu übertragen.

Die genannten Varianten mit den virtuellen Geräten können beispielsweise auch auf das Konvertierungsmodul verzichten, wenn beispielsweise keine Datenkonversion notwendig ist.

Auch können die Varianten mit den virtuellen Geräten jeweils ein entsprechendes Kryptographiemodul umfassen, dass die entsprechenden kryptographischen Daten für ein Gerät (physisch und/oder virtuell) und/oder für mehrere Geräte (physisch und/oder virtuell) umfassen. Hierzu kann beispielsweise ein virtuelles Gerät jeweils ein entsprechendes Kryptographiemodul umfassen oder die virtuellen Geräte greifen auf ein gemeinsames Kryptographiemodul zu.

Die Empfangsvorrichtung E kann beispielsweise passiv oder aktiv implementiert sein.

Bei einer aktiven Implementierung werden die ersten Nachrichten beispielsweise direkt durch das verteilte Datenbanksystem an die Empfangsvorrichtung E bzw. das System SYS geschickt (bzw. von der Empfangsvorrichtung E bzw. dem System SYS empfangen). Die entsprechenden Nachrichten können dabei z. B. eine Angabe umfassen für welches der Geräte des Automatisierungsnetzes AN die entsprechende Nachricht bestimmt ist.

Bei einer passiven Implementierung werden die ersten Nachrichten beispielsweise indirekt durch die Empfangsvorrichtung E bzw. das System SYS empfangen. Hierzu erfasst bzw. empfängt die Empfangsvorrichtung E bzw. das System SYS die Nachrichten aus dem ersten Netzwerk NW1 beispielsweise mit einem Paketfilter oder einem Netzwerkanalysewerkzeug (z. B. Wireshark) oder einem Werkzeug um Datenpakete aus dem Netzwerk abzurufen (z. B. WinPCap, libpcap). Die entsprechenden Nachrichten sind z. B. dabei nicht an die Empfangsvorrichtung E (oder das System SYS) bzw. dessen Netzwerkadresse gerichtet, sondern sind an die Geräte des Automatisierungsnetzwerkes AN gerichtet (indem z. B. ein bestimmter Gerätetyp in der Nachricht bzw. deren Inhalt angegeben ist).

Um festzustellen, ob beispielsweise eine entsprechende erste Nachricht für ein Gerät des Automatisierungsnetzwerkes AN bestimmt ist, umfasst die Empfangsvorrichtung (bzw. das System SYS) beispielsweise eine Gerätedatenbank, die ein Verzeichnis der Geräte des Automatisierungsnetzwerkes AN umfasst. Zusätzlich können in diesem Verzeichnis beispielsweise auch Geräteinformationen zu den jeweiligen Geräten gespeichert sein. Die Geräteinformationen können beispielsweise generelle Informationen zu einem Gerät umfassen. Dies können z. B. technische Merkmale wie Leistung, Fertigungsgeschwindigkeit, Energieverbrauch, Fertigungspräzision, Standort des Gerätes oder eine Kombination hiervon sein. Alternativ oder zusätzlich können die entsprechenden Geräteinformationen auch den zuletzt empfangenen bzw. abgerufenen Gerätezustand umfassen. Wurde beispielsweise innerhalb eines vorgegebenen Zeitraums bereits ein Gerätezustand empfangen, so kann beispielsweise auf ein erneutes Abrufen eines aktuellen Gerätezustandes verzichtet werden. Ist der vorgegebene Zeitraum 5 Minuten und wurde vor 1 Minute ein Gerätezustand für das Gerät empfangen, ist es beispielsweise nicht notwendig bis zum Ablauf des vorgegenen Zeitraums erneut einen Gerätezustand zu empfangen.

Die Sendevorrichtung S kann beispielsweise passiv oder aktiv implementiert sein.

Bei einer aktiven Implementierung werden die ersten Nachrichten beispielsweise direkt durch die Geräte des Automatisierungsnetzwerkes an die Sendevorrichtung S bzw. das System SYS geschickt. Die entsprechenden Nachrichten können dabei z. B. eine Angabe umfassen für welches verteilte Datenbanksystem (falls es mehrere dieser Systeme gibt) oder Netzwerk (z. B. das erste Kommunikationsnetzwerk) die entsprechende Nachricht bestimmt ist.

Bei einer passiven Implementierung werden die ersten Nachrichten beispielsweise indirekt durch die Sendevorrichtung S bzw. das System SYS empfangen. Hierzu erfasst bzw. empfängt die Sendevorrichtung S bzw. das System SYS die Nachrichten aus dem zweiten Netzwerk NW2 beispielsweise mit einem Paketfilter oder einem Netzwerkanalysewerkzeug (z. B. Wireshark) oder einem Werkzeug um Datenpakete aus dem Netzwerk abzurufen (z. B. WinPCap, libpcap). Die entsprechenden Nachrichten sind z. B. dabei nicht an die Sendevorrichtung S (oder des Systems SYS) bzw. dessen Netzwerkadresse gerichtet, sondern sind z. B. an eine andere Adresse oder anderes Gerät gerichtet. Beispielsweise kann ein Teil einer ursprünglich vorhandenen Kommunikationsinfrastruktur durch das das verteilte Datenbanksystem ersetzt worden sein und die entsprechenden Geräte oder Netzwerkadressen, an die die entsprechenden ersten Nachrichten geschickt werden sollen, existieren nicht mehr. Da die entsprechenden Geräte auch nicht mehr ohne weiteres umkonfiguriert werden können, würden ohne die Sendevorrichtung S die entsprechenden Nachrichten nicht für die neue Kommunikations-Infrastruktur verfügbar sein bzw. nicht an diese übermittelt werden können.

Auch die Sendevorrichtung S kann eine Gerätedatenbank umfassen (z. B. analog zur Empfangsvorrichtung), um beispielsweise festzustellen welches Gerät eine entsprechende Nachricht geschickt hat. Werden die Nachrichten beispielsweise zunächst passiv empfangen, kann eine solche Information beispielsweise anhand der Sendeadresse der Nachricht ermittelt werden. Hierzu werden die Geräteinformationen z. B. mittels der Sendeadresse abgerufen.

Die Erfindung ist dahingehend vorteilhaft um z. B. Legacy Geräte, an deren Konfiguration nichts geändert werden darf, mit einer neuen Blockketteninfrastruktur kommunizieren zu lassen. Die Konvertierung der Daten übernehmen die Vorrichtung bzw. das System.

Auch können die Vorrichtungen (z. B. die Sendevorrichtung oder die Empfangsvorrichtung) bzw. das System jeweils Smart-Contracts für die die Legacy-Systeme bzw. Geräte ausführen. Damit können insbesondere die Geräte blockkettenfähig gemacht werden, ohne an diesen Geräten überhaupt etwas zu ändern.

Insbesondere umfasst diese Vorrichtungen bzw. das System die notwendigen Komponenten, um mit einer Blockkette zu kommunizieren. Dies sind zum Beispiel Schlüsselspeicher mit kryptographischen Schlüsseln, um Transaktionen/Nachrichten für die Blockkette zu signieren oder entsprechende Prüfsummen zu überprüfen.

In einer Implementierungsvariante kann ein Modul, können mehrere Module oder können alle Module als Softwarekomponente oder als Hardwarekomponente oder als eine Kombination aus Hardware- und Softwarekomponenten realisiert werden.

Das System und/oder die Module und/oder die Sendevorrichtung und/oder die Empfangsvorrichtung und/oder das verteilte Datenbanksystem und/oder die Knoten des verteilten Datenbanksystems(z. B. Blockketten-Knoten) und/oder, Geräte können beispielsweise jeweils zusätzlich noch eine weitere oder mehrere weitere Komponente/n umfassen, wie beispielsweise einen Prozessor, eine Speichereinheit, weitere Kommunikationsschnittstellen (z. B. Ethernet, WLAN), ein Eingabegerät, insbesondere eine Computertastatur oder eine Computermaus, und ein Anzeigegerät (z. B. einen Monitor). Der Prozessor kann beispielsweise mehrere weitere Prozessoren umfassen, die insbesondere zur Realisierung von weiteren Ausführungsbeispielen verwendet werden können.

Bei dem Prozessor kann es sich beispielsweise um einen ASIC handeln, der anwendungsspezifisch für die Funktionen eines jeweiligen Moduls oder aller Module des Ausführungsbeispiels (und/oder weiterer Ausführungsbeispiele) realisiert wurde, wobei die Programmkomponente bzw. die Programmbefehle insbesondere als integrierte Schaltkreise realisiert sind. Bei dem Prozessor kann es sich beispielsweise auch um einen FPGA handeln, der insbesondere mittels der Programmbefehle derart konfiguriert wird, dass der FPGA die Funktionen eines jeweiligen Moduls oder aller Module des Ausführungsbeispiels (und/oder weiterer Ausführungsbeispiele) realisiert.

In den genannten Ausführungsbeispielen können die Netzwerkschnittstellen auch als integrale Netzwerkschnittstellen ausgebildet sein. Beispielsweise kann die erste Kommunikationsschnittstelle NI1 des Systems SYS und die erste Kommunikationsschnittstelle 210 der Empfangsvorrichtung E und/oder die zweite Kommunikationsschnittstelle 340 der Sendevorrichtung S als eine erste integrale Kommunikationsschnittstelle ausgebildet sein. Beispielsweise kann die zweite Kommunikationsschnittstelle NI2 des Systems SYS und die zweite Kommunikationsschnittstelle 240 der Empfangsvorrichtung E und/oder die erste Kommunikationsschnittstelle 310 der Sendevorrichtung S als eine zweite integrale Kommunikationsschnittstelle ausgebildet sein. Es kann beispielsweise die erste integrale Kommunikationsschnittstelle und die zweite integrale Kommunikationsschnittstelle als gemeinsame integrale Kommunikationsschnittstelle ausgebildet sein.

In weiteren Varianten können die Sendevorrichtung S und/oder die Empfangsvorrichtung E und/oder das System SYS beispielsweise als ein integrales Bauteil eines der Geräte ausgebildet sein, wobei die entsprechenden Kommunikationsschnittstellen zum Kommunizieren mit dem entsprechenden Gerät beispielsweise in einem solchen Fall eine Kommunikationsschnittstelle für einen Datenbus ist (z. B. eine PCI-Schnittstelle, eine USB-Schnittstelle). Beispielsweise können in einer solchen Variante Legacy-Geräte bzw. Geräte direkt an das verteilte Datenbanksystem angebunden werden, indem beispielsweise die Sendevorrichtung S und/oder die Empfangsvorrichtung E und/oder das System SYS in eine Kommunikationsschnittstelle des Legacy-Gerätes bzw. des Gerätes integriert wird (z. B. als ASIC oder FPGA). Bei der Kommunikationsschnittstelle des Gerätes kann es sich beispielsweise um eine austauschbare Netzwerkkarte handeln, wobei beispielsweise eine alte Netzwerkkarte durch eine entsprechende erfindungsgemäße Kommunikationsschnittstelle ersetzt wurde. Mit anderen Worten kann in einer solchen Variante eine Kommunikationsschnittstelle die Sendevorrichtung S und/oder die Empfangsvorrichtung E und/oder das System SYS umfassen oder die Kommunikationsschnittstelle ist als die Sendevorrichtung S und/oder die Empfangsvorrichtung E und/oder das System SYS ausgebildet.

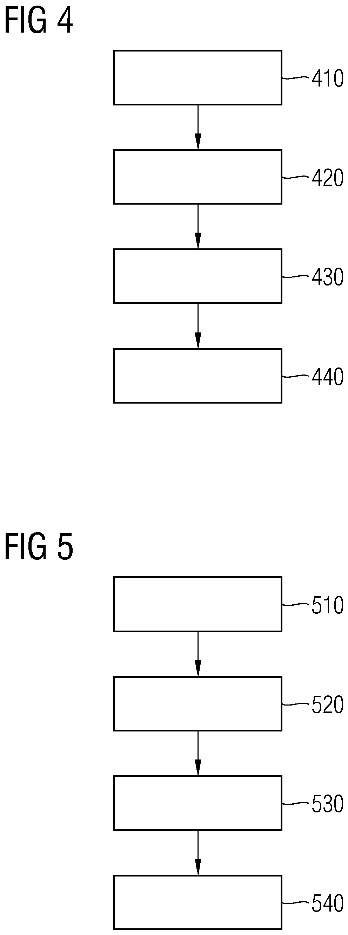

Die Fig. 4 zeigt ein viertes Ausführungsbeispiel der Erfindung als Ablaufdiagramm des erfindungsgemäßen Verfahrens.

Das Verfahren ist vorzugsweise rechnergestützt realisiert.

Im Einzelnen wird in diesem Ausführungsbeispiel ein Verfahren zum rechnergestützten Empfangen von Nachrichten realisiert.

Das Verfahren umfasst einen ersten Verfahrensschritt 410 zum Empfangen von ersten Nachrichten von einem verteilten Datenbanksystem mittels einer ersten Kommunikationsschnittstelle. Die ersten Nachrichten sind beispielsweise in einem Datenformat (z. B. ein XML-Datenformat) des verteilten Datenbanksystems gespeichert.

Das Verfahren umfasst einen zweiten Verfahrensschritt 420 zum Berechnen einer Zuordnung für die ersten Nachrichten, wobei beim Berechnen bestimmt wird für welche Geräte eine entsprechende erste Nachricht bestimmt ist.

Das Verfahren umfasst einen dritten Verfahrensschritt 430 zum Konvertieren des Nachrichteninhalts der entsprechenden ersten Nachricht in ein Datenformat für das zugeordnete Gerät. Das Datenformat ist insbesondere ein proprietäres Datenformat der Geräte.

Der dritte Verfahrensschritt ist insbesondere ein optionaler Verfahrensschritt. Dies ist beispielsweise der Fall, wenn der Nachrichteninhalt der entsprechenden ersten Nachricht nicht konvertiert werden muss bzw. der Nachrichteninhalt bzw. die entsprechende erste Nachricht ein Datenformat aufweist, das von den Geräten verarbeitet werden kann. In einem solchen Fall entspricht der konvertierte Nachrichteninhalt des vierten Verfahrensschrittes dem (unkonvertierten) Nachrichteninhalt der entsprechenden ersten Nachricht bzw. die entsprechende erste Nachricht wird als zweite Nachricht an das oder die entsprechenden Geräte gesendet.

Das Verfahren umfasst einen vierten Verfahrensschritt 440 zum Übertragen des konvertierten Nachrichteninhalts an das Gerät, das der entsprechenden ersten Nachricht zugeordnet ist.

Die Fig. 5 zeigt ein fünftes Ausführungsbeispiel der Erfindung als Ablaufdiagramm des erfindungsgemäßen Verfahrens.

Das Verfahren ist vorzugsweise rechnergestützt realisiert.

Im Einzelnen wird in diesem Ausführungsbeispiel ein Verfahren zum rechnergestützten Senden von Nachrichten.

Das Verfahren umfasst einen ersten Verfahrensschritt 510 zum Empfangen von ersten (weiteren) Nachrichten von Geräten mittels einer Kommunikationsschnittstelle. Diese Nachrichten sind beispielsweise in einem proprietären Datenformat der Geräte gespeichert.

Das Verfahren umfasst einen zweiten Verfahrensschritt 520 zum Berechnen einer Zuordnung anhand des jeweiligen Nachrichteninhalts der ersten (weiteren) Nachrichten, wobei berechnet wird, welches Gerät eine entsprechende erste weitere Nachricht gesendet hat.

Das Verfahren umfasst einen dritten Verfahrensschritt 530 zum Konvertieren des Nachrichteninhalts der entsprechenden ersten (weiteren) Nachricht in ein Datenformat für das verteilte Datenbanksystem, wobei das Datenformat z. B. von dem verteilten Datenbanksystem verarbeitet werden kann. Bei dem Datenformat kann es sich z. B. um ein XML Datenformat, für das ein passendes XML Schema verfügbar ist. Die Knoten des verteilten Datenbanksystems können so z. B. einen Gerätestatus eines der Geräte des Automatisierungsnetzwerkes auswerten, um z. B. dem entsprechenden Automatisierungsnetzwerk bzw. dem entsprechenden Gerät abhängig von dem Gerätezustand eine Nachricht zu schicken.

Der dritte Verfahrensschritt ist insbesondere ein optionaler Verfahrensschritt. Dies ist beispielsweise der Fall, wenn der Nachrichteninhalt der entsprechenden ersten Nachricht nicht konvertiert werden muss bzw. der Nachrichteninhalt bzw. die entsprechende erste Nachricht ein Datenformat aufweist, das von dem verteilten Datenbanksystem verarbeitet werden kann. In einem solchen Fall entspricht der konvertierte Nachrichteninhalt des vierten Verfahrensschrittes dem (unkonvertierten) Nachrichteninhalt der entsprechenden ersten Nachricht bzw. die entsprechende erste Nachricht wird als zweite Nachricht an das verteilte Datenbanksystem gesendet.

Das Verfahren umfasst einen vierten Verfahrensschritt 540 zum Übertragen des konvertierten Nachrichteninhalts an das verteilte Datenbanksystem.

Die Erfindung betrifft beispielsweise ein Gateway oder einen Netzwerkadapter mit dem alte Geräte oder Legacy-Geräte an ein verteiltes Datenbanksystem wie eine Blockkette angebunden werden können, ohne eine Konfiguration bei den alten Geräten ändern zu müssen.

Entsprechend sind beispielsweise die Nachrichten die von dem verteilten Datenbanksystem gesendet bzw. von diesem empfangen werden Transaktionen. Entsprechend sind beispielsweise die Nachrichten die an das verteilte Datenbanksystem gesendet werden Transaktionen.

Ist beispielsweise das zweite Netzwerk NW2 mit seinen Geräten (Fig. 1 - 3) beispielsweise auch ein verteiltes Datenbanksystem, so können beispielsweise mittels der Erfindung (Vorrichtungen, System, Verfahren) auch zwei unterschiedliche verteilte Datenbanksysteme miteinander kommunizieren.

Obwohl die Erfindung im Detail durch die Ausführungsbeispiele näher illustriert und beschrieben wurde, ist die Erfindung nicht durch die offenbarten Beispiele eingeschränkt, und andere Variationen können vom Fachmann hieraus abgeleitet werden, ohne den Schutzumfang der Erfindung zu verlassen.
[1] Andreas M. Antonopoulos "Mastering Bitcoin: Unlocking Digital Cryptocurrencies", O'Reilly Media, December 2014
[2] Roger M. Needham, Michael D. Schroeder "Using encryption for authentication in large networks of computers" ACM: Communications of the ACM. Band 21, Nr. 12 December 1978,
[3] Ross Anderson "Security Engineering. A Guide to Building Dependable Distributed Systems" Wiley, 2001
[4] Henning Diedrich "Ethereum: Blockchains, Digital Assets, Smart Contracts, Decentralized Autonomous Organizations", CreateSpace Independent Publishing Platform, 2016
[5] "The Ethereum Book Project/Mastering Ethereum" https://github.com/ethereumbook/ethereumbook, Stand 5.10.2017
[6] Leemon Baird "The Swirlds Hashgraph Consensus Algorithm: Fair, Fast, Byzantine Fault Tolerance", Swirlds Tech Report SWIRLDS-TR-2016-01, 31.5.2016
[7] Leemon Baird "Overview of Swirlds Hashgraph", 31.5.2016
[8] Blockchain Oracles https://blockchainhub.net/blockchain-oracles/ Stand 14.03.2018

## Patentansprüche

1. Empfangsvorrichtung (E), umfassend:
- eine erste Kommunikationsschnittstelle (210), wobei
- die erste Kommunikationsschnittstelle dazu eingerichtet ist erste Nachrichten von einem verteilten Datenbanksystem zu empfangen;
- ein Identifikationsmodul (220), wobei
- das Identifikationsmodul dazu eingerichtet ist anhand des jeweiligen Nachrichteninhalts der ersten Nachrichten eine Zuordnung berechnet, für welche Geräte eine entsprechende erste Nachricht bestimmt ist;
- ein Konvertierungsmodul (230), wobei
- das Konvertierungsmodul dazu eingerichtet ist den Nachrichteninhalt der entsprechenden ersten Nachricht in ein Datenformat für das zugeordnete Gerät zu konvertieren,
- ein Kryptographiemodul wobei das Kryptographiemodul den Geräten zugeordnete kryptographische Daten umfasst,
die kryptographischen Daten anhand einer Kombination aus eindeutigen gerätespezifischen Daten und empfangsvorrichtungsspezifischer Daten ermittelt werden und für das entsprechende Gerät die kryptographischen Daten reproduzierbar ermittelt werden;
- das Kryptographiemodul anhand der kryptographischen Daten zumindest einen Teil des Nachrichteninhalts der entsprechenden ersten Nachricht für ein zugeordnetes Gerät überprüft und/oder entschlüsselt,
- für das Überprüfen und/oder das Entschlüsseln die entsprechenden kryptographischen Daten anhand des zugeordneten Gerätes geladen werden;
- eine zweite Kommunikationsschnittstelle (240), wobei
- die zweite Kommunikationsschnittstelle dazu eingerichtet ist den konvertieren Nachrichteninhalt an das Gerät zu übertragen, das der entsprechenden ersten Nachricht zugeordnet ist.

2. Empfangsvorrichtung (E) nach Anspruch 1, wobei
- die Empfangsvorrichtung einen Gerätezustand von dem einer entsprechenden ersten Nachricht zugeordneten Gerät abruft,
- eine Übertragung an das zugeordnete Gerät abhängig von dem abgerufenen Gerätezustand erfolgt.

3. Empfangsvorrichtung (E) nach Anspruch 2, wobei
- der Gerätezustand einen Datensatz über die verfügbaren Geräteressourcen und/oder aktuellen Geräteeigenschaften umfasst.

4. Empfangsvorrichtung (E) nach einem der vorhergehenden Ansprüche, wobei
- eine Übertragung an das entsprechende Gerät erfolgt, wenn vorgegebene Anforderungen der entsprechenden ersten Nachricht durch das zugeordnete Gerät erfüllt sind,
- beispielsweise die Erfüllung der vorgegebenen Anforderungen anhand des Gerätezustandes überprüft wird.

5. Sendevorrichtung (S), aufweisend
- eine erste Kommunikationsschnittstelle (310), wobei
- die erste Kommunikationsschnittstelle dazu eingerichtet ist mit Geräten zu kommunizieren,
- die Kommunikationsschnittstelle dazu eingerichtet ist erste Nachrichten von den Geräten zu empfangen;
- ein Identifikationsmodul (320), wobei
- das Identifikationsmodul dazu eingerichtet ist anhand des jeweiligen Nachrichteninhalts der ersten Nachrichten eine Zuordnung berechnet, welches Gerät eine entsprechende erste Nachricht gesendet hat;
- ein Konvertierungsmodul (330), wobei
- das Konvertierungsmodul dazu eingerichtet ist den Nachrichteninhalt der entsprechenden ersten Nachricht in ein Datenformat für das verteilte Datenbanksystem zu konvertieren;
- ein Kryptographiemodul, wobei
- das Kryptographiemodul den Geräten zugeordnete kryptographische Daten umfasst,
die kryptographischen Daten anhand einer Kombination aus eindeutigen gerätespezifischen Daten und sendevorrichtungsspezifischer Daten ermittelt werden, für das entsprechende Gerät die kryptographischen Daten reproduzierbar ermittelt werden;
- das Kryptographiemodul anhand des zugeordneten Gerätes entsprechende kryptographische Daten lädt,
- mittels der entsprechenden kryptographischen Daten zumindest ein Teil des Nachrichteninhalts der entsprechenden ersten Nachricht gerätespezifischen für das zugeordnete Geräte kryptographisch geschützt werden;
- eine zweite Kommunikationsschnittstelle (340), wobei
- die zweite Kommunikationsschnittstelle dazu eingerichtet ist mit einem verteilten Datenbanksystem kommunizieren,
- die Kommunikationsschnittstelle dazu eingerichtet ist den konvertierten Nachrichteninhalt an das verteilte Datenbanksystem zu übertragen.

6. Sendevorrichtung (S) und/oder Empfangsvorrichtung (E) nach einem der vorhergehenden Ansprüche, wobei
- das verteilte Datenbanksystem eine Blockkette ist,
- beispielsweise die Nachrichten die von dem verteilten Datenbanksystem gesendet und/oder empfangen werden Transaktionen sind.

7. Sendevorrichtung (S) und/oder Empfangsvorrichtung (E) nach einem der vorhergehenden Ansprüche, wobei
- zumindest ein Teil der Geräte, Geräte eines Automatisierungsnetzwerkes sind.

8. System (SYS), aufweisend:
- eine Empfangsvorrichtung (E) nach einem der Ansprüche 1-4 oder 6 - 7;
- eine Sendevorrichtung (S) nach einem der Ansprüche 5-7.

9. Verfahren zum rechnergestützten Empfangen von Nachrichten mit folgenden Verfahrensschritten:
- Empfangen von ersten Nachrichten von einem verteilten Datenbanksystem mittels einer ersten Kommunikationsschnittstelle;
- Berechnen einer Zuordnung für die ersten Nachrichten, wobei beim Berechnen bestimmt wird für welche Geräte eine entsprechende erste Nachricht bestimmt ist;
- Konvertieren des Nachrichteninhalt der entsprechenden ersten Nachricht in ein Datenformat für das zugeordnete Gerät;
- Laden von kryptographischen Daten anhand des zugeordneten Gerätes wobei die kryptographischen Daten dem zugeordneten Gerät zugeordnet sind und die kryptographischen Daten anhand einer Kombination aus eindeutigen gerätespezifischen Daten und empfangsvorrichtungsspezifischer Daten ermittelt werden und für das entsprechende Gerät die kryptographischen Daten reproduzierbar ermittelt werden;
- Überprüfen und/oder Entschlüsseln zumindest eines Teils des Nachrichteninhalts der entsprechenden ersten Nachricht für das zugeordnetes Gerät anhand der kryptographischen Daten;
- Übertragen des konvertierten Nachrichteninhalts an das Gerät, das der entsprechenden ersten Nachricht zugeordnet ist.

10. Verfahren zum rechnergestützten Senden von Nachrichten mit folgenden Verfahrensschritten:
- Empfangen von ersten Nachrichten von Geräten mittels einer Kommunikationsschnittstelle;
- Berechnen einer Zuordnung anhand des jeweiligen Nachrichteninhalts der ersten Nachrichten, wobei berechnet wird, welches Gerät eine entsprechende erste weitere Nachricht gesendet hat;
- Konvertieren des Nachrichteninhalts der entsprechenden ersten Nachricht in ein Datenformat für das verteilte Datenbanksystem;
- Laden von kryptographische Daten anhand des zugeordneten Gerätes, wobei die kryptographischen Daten dem zugeordneten Gerät zugeordnet sind, und die kryptographischen Daten anhand einer Kombination aus eindeutigen gerätespezifischen Daten und sendevorrichtungsspezifischer Daten ermittelt werden, (Seite 51 der Beschreibung, Zeile 28-32) und für das entsprechende Gerät die kryptographischen Daten reproduzierbar ermittelt werden; wobei mittels der entsprechenden kryptographischen Daten zumindest ein Teil des Nachrichteninhalts der entsprechenden ersten Nachricht gerätespezifischen für das zugeordnete Geräte kryptographisch geschützt werden;
- Übertragen des konvertierten Nachrichteninhalts an das verteilte Datenbanksystem.

11. Computerprogrammprodukt mit Programmbefehlen die bei der Ausführung des Programms durch einen Prozessor diesen veranlassen, die Schritte des Verfahrens nach Anspruch 9 oder 10 auszuführen.

12. Bereitstellungsvorrichtung für das Computerprogrammprodukt nach Anspruch 11, wobei die Bereitstellungsvorrichtung das Computerprogrammprodukt speichert und/oder bereitstellt.

## Claims

1. Receiving apparatus (E), comprising:
- a first communication interface (210), wherein
- the first communication interface is configured to receive first messages from a distributed database system;
- an identification module (220), wherein
- the identification module is configured to use the respective message content of the first messages to calculate an association concerning which devices an applicable first message is intended for;
- a conversion module (230), wherein
- the conversion module is configured to convert the message content of the applicable first message into a data format for the associated device,
- a cryptography module, wherein the cryptography module comprises cryptographic data associated with the devices,
the cryptographic data are ascertained on the basis of a combination of explicit device-specific data and receiving-apparatus-specific data, and the cryptographic data are reproducibly ascertained for the applicable device;
- the cryptography module uses the cryptographic data to check and/or decrypt at least some of the message content of the applicable first message for an associated device,
- the checking and/or the decrypting involve/s the applicable cryptographic data being loaded on the basis of the associated device;
- a second communication interface (240), wherein
- the second communication interface is configured to transmit the converted message content to the device associated with the applicable first message.

2. Receiving apparatus (E) according to Claim 1, wherein
- the receiving apparatus retrieves a device state from the device associated with an applicable first message,
- a transmission to the associated device is effected on the basis of the retrieved device state.

3. Receiving apparatus (E) according to Claim 2, wherein
- the device state comprises a data record about the available device resources and/or current device properties.

4. Receiving apparatus (E) according to one of the preceding claims, wherein
- a transmission to the applicable device is effected if prescribed requirements of the applicable first message are met by the associated device,
- for example the meeting of the prescribed requirements is checked on the basis of the device state.

5. Sending apparatus (S), having
- a first communication interface (310), wherein
- the first communication interface is configured to communicate with devices
- the communication interface is configured to receive first messages from the devices;
- an identification module (320), wherein
- the identification module is configured to use the respective message content of the first messages to calculate an association concerning which device has sent an applicable first message;
- a conversion module (330), wherein
- the conversion module is configured to convert the message content of the applicable first message into a data format for the distributed database system;
- a cryptography module, wherein
- the cryptography module comprises cryptographic data associated with the devices,
the cryptographic data are ascertained on the basis of a combination of explicit device-specific data and sending-apparatus-specific data, and the cryptographic data are reproducibly ascertained for the applicable device;
- the cryptography module uses the associated device to load applicable cryptographic data,
- the applicable cryptographic data are used to cryptographically protect at least some of the message content of the applicable first message in device-specific fashion for the associated device;
- a second communication interface (340), wherein
- the second communication interface is configured to communicate with a distributed database system,
- the communication interface is configured to transmit the converted message content to the distributed database system.

6. Sending apparatus (S) and/or receiving apparatus (E) according to one of the preceding claims, wherein
- the distributed database system is a blockchain,
- for example the messages sent and/or received by the distributed database system are transactions.

7. Sending apparatus (S) and/or receiving apparatus (E) according to one of the preceding claims, wherein
- at least some of the devices are devices of an automation network.

8. System (SYS) having:
- a receiving apparatus (E) according to one of Claims 1-4 or 6-7;
- a sending apparatus (S) according to one of Claims 5-7.

9. Method for the computer-aided receiving of messages, having the following method steps:
- receiving first messages from a distributed database system by means of a first communication interface;
- calculating an association for the first messages, wherein the calculating involves determining which devices an applicable first message is intended for;
- converting the message content of the applicable first message into a data format for the associated device;
- loading cryptographic data on the basis of the associated device, wherein the cryptographic data are associated with the associated device and the cryptographic data are ascertained on the basis of a combination of explicit device-specific data and receiving-apparatus-specific data, and the cryptographic data are reproducibly ascertained for the applicable device;
- checking and/or decrypting at least some of the message content of the applicable first message for the associated device on the basis of the cryptographic data;
- transmitting the converted message content to the device associated with the applicable first message.

10. Method for the computer-aided sending of messages, having the following method steps:
- receiving first messages from devices by means of a communication interface;
- calculating an association on the basis of the respective message content of the first messages, wherein it is calculated which device has sent an applicable first further message;
- converting the message content of the applicable first message into a data format for the distributed database system;
- loading cryptographic data on the basis of the associated device, wherein the cryptographic data are associated with the associated device, and the cryptographic data are ascertained on the basis of a combination of explicit device-specific data and sending-apparatus-specific data, and the cryptographic data are reproducibly ascertained for the applicable device;
wherein the applicable cryptographic data are used to cryptographically protect at least some of the message content of the applicable first message in device-specific fashion for the associated device;
- transmitting the converted message content to the distributed database system.

11. Computer program product having program commands that, when the program is executed by a processor, prompt the latter to carry out the steps of the method according to Claim 9 or 10.

12. Providing apparatus for the computer program product according to Claim 11, wherein the providing apparatus stores and/or provides the computer program product.

## Revendications

1. Dispositif de réception (E), comprenant :
- une première interface de communication (210),
- la première interface de communication étant configurée pour recevoir des premiers messages d'un système de base de données distribué ;
- un module d'identification (220),
- le module d'identification étant configuré pour calculer, sur la base du contenu de message respectif des premiers messages, une association indiquant à quels appareils un premier message correspondant est destiné ;
- un module de conversion (230),
- le module de conversion étant configuré pour convertir le contenu de message du premier message correspondant en un format de données pour l'appareil associé,
- un module de cryptographie,
- le module de cryptographie comprenant des données cryptographiques associées aux appareils, les données cryptographiques étant déterminées à l'aide d'une combinaison de données univoques spécifiques aux appareils et de données spécifiques au dispositif de réception et les données cryptographiques étant déterminées de manière reproductible pour l'appareil correspondant ;
- le module de cryptographie vérifiant et/ou décryptant, à l'aide des données cryptographiques, au moins une partie du contenu de message du premier message correspondant pour un appareil associé,
- les données cryptographiques correspondantes étant chargées à l'aide de l'appareil associé pour vérification et/ou décryptage ;
- une deuxième interface de communication (240),
- la deuxième interface de communication étant configurée pour transmettre le contenu de message converti à l'appareil qui est associé au premier message correspondant.

2. Dispositif de réception (E) selon la revendication 1,
- le dispositif de réception appelant un état d'appareil de l'appareil associé à un premier message correspondant ;
- une transmission à l'appareil associé ayant lieu en fonction de l'état d'appareil appelé.

3. Dispositif de réception (E) selon la revendication 2,
- l'état d'appareil incluant un jeu de données sur les ressources disponibles de l'appareil et/ou les caractéristiques actuelles de l'appareil.

4. Dispositif de réception (E) selon l'une des revendications précédentes,
- une transmission à l'appareil correspondant ayant lieu si des exigences données du premier message correspondant sont remplies par l'appareil associé ;
- par exemple, la satisfaction des exigences données étant vérifiée à l'aide de l'état de l'appareil.

5. Dispositif d'émission (S) comportant :
- une première interface de communication (310),
- la première interface de communication étant configurée pour communiquer avec des appareils,
- l'interface de communication étant configurée pour recevoir des premiers messages des appareils ;
- un module d'identification (320),
- le module d'identification étant configuré pour calculer, sur la base du contenu de message respectif des premiers messages, une association indiquant quel appareil a envoyé un premier message correspondant ;
- un module de conversion (330),
- le module de conversion étant configuré pour convertir le contenu de message du premier message correspondant en un format de données pour le système de base de données distribué ;
- un module de cryptographie
- le module de cryptographie comprenant des données cryptographiques associées aux appareils, les données cryptographiques étant déterminées à l'aide d'une combinaison de données univoques spécifiques aux appareils et de données spécifiques au dispositif d'émission, les données cryptographiques étant déterminées de manière reproductible pour l'appareil correspondant ;
- le module de cryptographie chargeant des données cryptographiques correspondantes à l'aide de l'appareil associé ;
- au moins une partie du contenu de message du premier message correspondant étant, au moyen des données cryptographiques correspondantes, protégée cryptographiquement de manière spécifique à l'appareil pour l'appareil associé ;
- une deuxième interface de communication (340),
- la deuxième interface de communication étant configurée pour communiquer avec un système de base de données distribué,
- l'interface de communication étant configurée pour transmettre le contenu de message converti au système de base de données distribué.

6. Dispositif d'émission (S) et/ou dispositif de réception (E) selon l'une des revendications précédentes,
- le système de base de données distribué étant une chaîne de blocs,
- par exemple les messages émis et/ou reçus par le système de base de données distribué étant des transactions.

7. Dispositif d'émission (S) et/ou dispositif de réception (E) selon l'une des revendications précédentes,
- au moins une partie des appareils étant des appareils d'un réseau d'automatisation.

8. Système (SYS), comprenant :
- un dispositif de réception (E) selon l'une des revendications 1-4 ou 6-7,
- un dispositif d'émission (S) selon l'une des revendications 5-7.

9. Procédé pour la réception de messages assistée par ordinateur, comportant les étapes suivantes :
- réception de premiers messages d'un système de base de données distribué au moyen d'une première interface de communication ;
- calcul d'une association pour les premiers messages avec détermination, lors du calcul, à quels appareils est destiné un premier message correspondant ;
- conversion du contenu de message du premier message correspondant en un format de données pour l'appareil associé ;
- chargement de données cryptographiques à l'aide de l'appareil associé, les données cryptographiques étant associées à l'appareil associé et les données cryptographiques étant déterminées à l'aide d'une combinaison de données univoques spécifiques aux appareils et de données spécifiques au dispositif de réception et les données cryptographiques étant déterminées de manière reproductible pour l'appareil correspondant ;
- vérification et/ou décryptage d'au moins une partie du contenu de message du premier message correspondant pour l'appareil associé à l'aide des données cryptographiques ;
- transmission du contenu de message converti à l'appareil qui est associé au premier message correspondant.

10. Procédé pour l'émission de messages assistée par ordinateur, comportant les étapes suivantes :
- réception de premiers messages d'appareils au moyen d'une interface de communication ;
- calcul d'une association à l'aide du contenu de message respectif des premiers messages avec calcul établissant quel appareil a émis un premier autre message correspondant ;
- conversion du contenu de message du premier message correspondant en un format de données pour le système de base de données distribué ;
- chargement de données cryptographiques à l'aide de l'appareil associé, les données cryptographiques étant associées à l'appareil associé et les données cryptographiques étant déterminées à l'aide d'une combinaison de données univoques spécifiques aux appareils et de données spécifiques au dispositif d'émission (page 51 de la description, ligne 28-32) et les données cryptographiques étant déterminées de manière reproductible pour l'appareil correspondant ;
- au moins une partie du contenu de message du premier message correspondant étant, au moyen des données cryptographiques correspondantes, protégée cryptographiquement de manière spécifique à l'appareil pour l'appareil associé.

11. Produit de programme informatique avec des ordres de programme qui, lors de l'exécution du programme par un processeur, font exécuter par celui-ci les étapes du procédé selon la revendication 9 ou 10.

12. Dispositif de mise à disposition pour le produit de programme informatique selon la revendication 11, le dispositif de mise à disposition sauvegardant et/ou fournissant le produit de programme informatique.
